# EUROPEAN PATENT APPLICATION

(11) **EP 4 603 274 A1**
(43) Date of publication of application: **20.08.2025**
(21) Application number: 24157708.9
(22) Date of filing: 14.02.2024
(51) Int. Cl.: B32B 3/06, B32B 3/08, B32B 5/18, B32B 7/10, B32B 7/12, B32B 27/06, B32B 27/08, B32B 27/20, B32B 27/34, B32B 27/36

(54) **COMPOSITE PANEL WITH CONNECTION MEANS WITH LOAD BEARING CAPACITY, METHOD OF PRODUCING SUCH A COMPOSITE PANEL, AND ASSEMBLY COMPRISING ONE OR MORE SUCH COMPOSITE PANEL**

(71) Applicant: Verhaeghe, Jan, 9120 Haasdonk (BE); De Roeve, Koen, 9290 Berlare (BE)
(72) Inventor: VERHAEGHE, JAN, 9120 Haasdonk (BE)
(74) Representative: Jacobs, Lambert

(57) **Abstract**

A composite panel comprising an edge profile (g) with load bearing capacity, the composite panel comprising: a first (a1), a second (b), and a third (a3) thermoplastic polymer layer stacked on top of each other, and pairwise chemically adhered or glued or chemically cross-linked to each other; the first and third layer (a1, a3) extending further than the second layer (b); the composite panel further comprising an elongated element (g) having a first portion (g1) situated between the first and third layer (a1, a3), and a second portion (g2) situated outside of the first and third layer (a1, a3); the first portion (g1) being chemically adhered or glued or chemically cross-linked to the first (a1) and third (a3) thermoplastic polymer layer.

## Description

### Field of the invention

The present invention relates in general to the field of composite panels, and to assemblies comprising composite panels, and more specifically to composite panels comprising at least one edge profile with load bearing capacity, and assemblies comprising such composite panels

### Background of the invention

Composite panels, and methods of producing composite panels are known in the art. An important advantage of composite panels is their relatively low weight as compared to for example steel structures, but an important disadvantage is their much lower strength.

Composite panels comprising multiple layers of plastic materials are also known in the art. Several techniques are well-known for combining plastic materials such as laminating, welding, gluing, or stitching. When a relatively high force is exerted upon such multilayer panels, the various layers may separate, referred to as "delamination".

Another challenge of composite panels is that they cannot easily be connected to each other, or to other structures, e.g. metal structures, especially when one or more of the plastic materials are fibre-reinforced.

The present invention is directed to composite panels which are strong and rigid, and robust against vibrations and tensile stress exerted upon them especially caused by a force parallel to the panel, and which can be connected to each other, or to other structures, in an easy and highly reliable and strong manner.

There is always room for improvements or alternatives.

### Summary of the invention

It is an object of embodiments of the present invention to provide a composite panel with good mechanical properties, such as one or more of the following: being highly robust against a relatively high tensile strength, being highly robust against shocks and vibrations, and being easily connectable to each other, or to other structures, in an easy and highly reliable and strong manner.

It is also an object of embodiments of the present invention to provide an assembly comprising one or more such composite panels with good mechanical properties, such as one or more of the following: the assembly being easy to produce, the assembly being robust against a relatively high force exerted upon one or more of its components or elements, being highly robust against shocks and vibrations exerted upon one or more of its components or elements.

It is also an object of embodiments of the present invention to provide methods of producing such composite panels and such assemblies.

It is also an object of embodiments of the present invention to provide a container, (e.g. a railway container or a shipping container) having good mechanical properties mentioned above.

It is also an object of embodiments of the present invention to provide a cargo box for a transport vehicle having good mechanical properties mentioned above.

It is also an object of embodiments of the present invention to provide a shelter having good mechanical properties mentioned above.

It is also an object of embodiments of the present invention to provide a partially open or a substantially closed box (optionally with a hatch, or a door, or a removable lid) having good mechanical properties mentioned above.

It is also an object of embodiments of the present invention to provide a helipad or an airfield matting suitable for landing and lift-off of military aeroplanes.

These and other objectives are accomplished by embodiments of the present invention.

According to a first aspect, the present invention provides a composite panel comprising an elongated element (e.g. g), e.g. an edge profile, with load bearing capacity, the composite panel comprising: a first thermoplastic polymer layer (e.g. a1) having a first boundary surface (e.g. bs1); a second thermoplastic polymer layer (e.g. b) having a second boundary surface (e.g. bs2) and a third boundary surface (e.g. bs3); a third thermoplastic polymer layer (e.g. a3) having a fourth boundary surface (e.g. bs4); wherein the second thermoplastic polymer layer (e.g. b) is situated between the first (e.g. a1) and the third thermoplastic polymer layer (e.g. a3); wherein the first boundary surface (e.g. bs1) is chemically adhered or glued or chemically cross-linked to the second boundary surface (e.g. bs2), and wherein the third boundary surface (e.g. bs3) is chemically adhered or glued or chemically cross-linked to the fourth boundary surface (e.g. bs4); wherein, on at least one side or edge of the composite panel, the first and the third thermoplastic polymer layer (e.g. a1, a3) extend further than the second thermoplastic polymer layer (e.g. b) by a distance (e.g. E1) of at least 5 mm; wherein, on said at least one side, the composite panel further comprises an elongated element (e.g. g) having a transversal cross section with a first portion (e.g. g1) (also referred to herein as "interior portion of the elongated element") that is situated between the first and the third thermoplastic polymer layer (e.g. a1, a3); wherein the first portion (e.g. g1) of the elongated element (e.g. g) has a fifth boundary surface (e.g. bs5) that is chemically adhered or glued or chemically cross-linked to the first boundary surface (e.g. bs1) of the first thermoplastic polymer layer (e.g. a1), and has a sixth boundary surface (e.g. bs6) that is chemically adhered or glued or chemically cross-linked to the fourth boundary surface (e.g. bs4) of the third thermoplastic polymer layer (e.g. a3).

The elongated element may further comprise a second portion (e.g. g2) (also referred to herein as "exterior portion of the elongated element") that is situated outside (e.g. laterally outside) of the first and the third thermoplastic polymer layer (e.g. a1, a3).

In an embodiment, the elongated element (e.g. g) is glued (using an adhesive) or chemically cross-linked (using a composition) to the thermoplastic polymer layers a1 and a3 in such as way as to tolerate a shear force of at least 1 kN, or at least 2 kN, or at least 3 kN, or at least 4 kN, or at least 5 kN, or at least 6 kN, or at least 7 kN, or at least 8 kN, or at least 9 kN, or at least 10 kN without breaking from the composite panel.

In an embodiment, the first and the third thermoplastic polymer layer (e.g. a1, a3) extend further than the second thermoplastic polymer layer (e.g. b) by a distance (e.g. E1) of at least at least 6 mm, or at least 7 mm, or at least 8 mm, or at least 10 mm, or at least 12 mm, or at least 15 mm, or at least 20 mm, or at least 25 mm. The distance E1 may be smaller than 10 cm, or smaller than 50 mm, or smaller than 45 mm, or smaller than 40 mm, or smaller than 35 mm, or smaller than 30 mm.

In an embodiment, the first thermoplastic polymer layer (e.g. a1) has a first thickness (e.g. T1) and a first area, the second thermoplastic polymer layer (e.g. b) has a second thickness (e.g. T2) and a second area, and the third thermoplastic polymer layer (e.g. a3) has a third thickness (e.g. T3) and a third area, and the first area is substantially equal to the third area, but the second area is smaller than the first area.

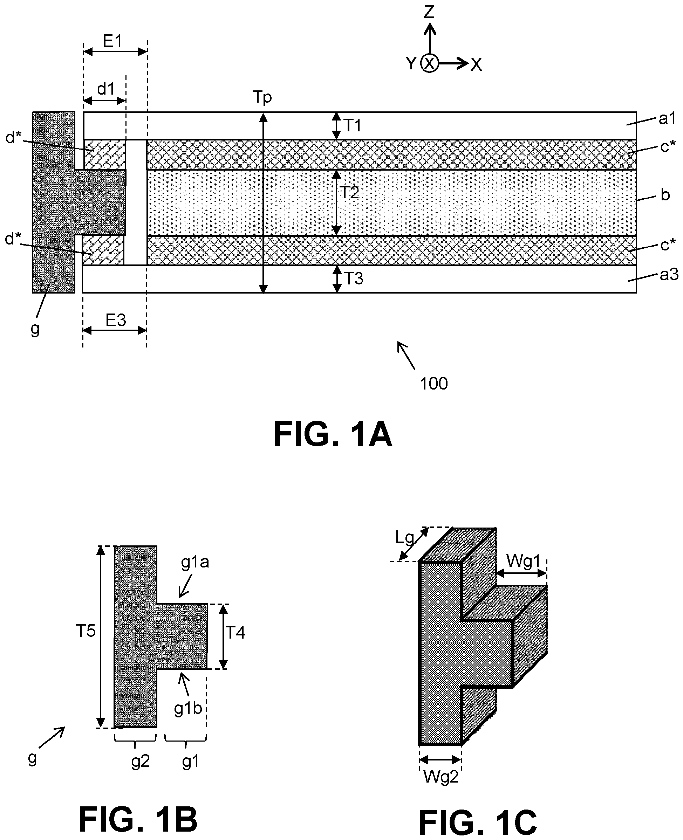

In an embodiment, the first thermoplastic polymer layer (e.g. a1) has a rectangular shape (seen from the top in FIG. 1A) with a first length L1 and a first width W1 defining a first area; the third thermoplastic polymer layer (e.g. a3) has a rectangular shape with a third length L3 and a third width W3; and the second thermoplastic polymer layer (e.g. b) has a rectangular shape with a second length L2 and a second width W2; wherein L1 is substantially equal to L3 (e.g. ± 2 mm), and wherein W1 is substantially equal to W3 (e.g. ± 2 mm), and wherein L2 is at least 5 mm (or at least 10 mm) smaller than L1 and/or wherein W2 is at least 5 mm (or at least 10 mm) smaller than W1.

In an embodiment, the elongated element has a length (e.g. Lg) of at least 12 cm, or at least 15 cm, or at least 20 cm, or at least 25 cm.

In an embodiment, the elongated element (e.g. g) is made of a thermoplastic material, preferably selected from the group consisting of polyamide or nylon, e.g. nylon PA6, or polyester.

In an embodiment, the elongated element comprises aluminum or an aluminum alloy.

In an embodiment, the first portion (e.g. g1) of the elongated element (e.g. g) has a thickness (e.g. T4) substantially equal to a thickness (e.g. T2) of the second thermoplastic polymer layer (e.g. b) within a predefined tolerance margin of ±3 mm or ±2 mm or ±1 mm.

In an embodiment, the first portion (e.g. g1) of the elongated element (e.g. g) is a solid body (i.e. does not have a tubular shape, and is not hollow).

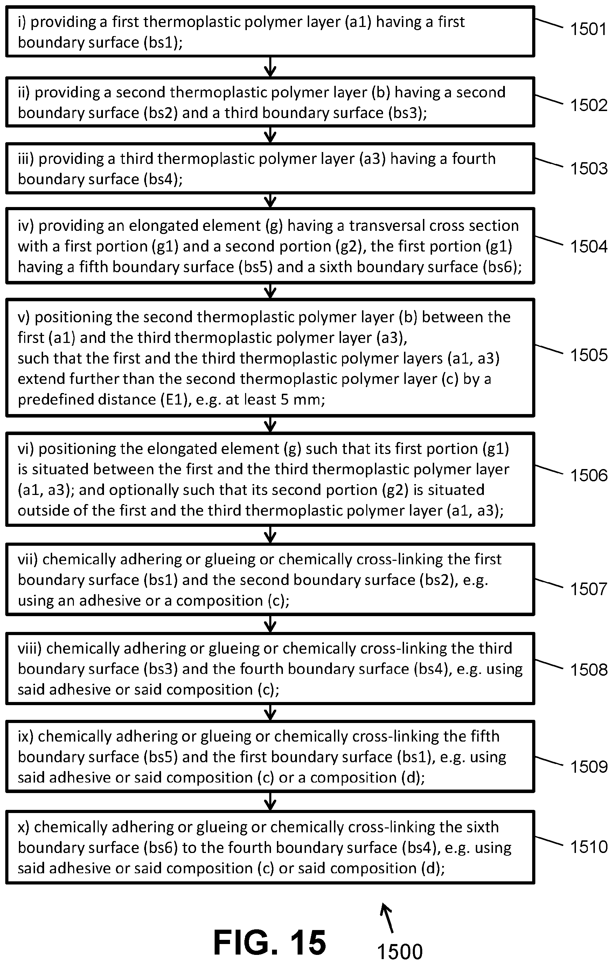

In an embodiment, the elongated element may have one or more holes, e.g. blind holes or through holes, extending in a direction transverse to the longitudinal direction of the elongated element, each hole having an internal screw thread, e.g. as illustrated in FIG. 15. This allows for example hinges or other connection elements to be fastened to the elongated element, and thus to the composite panel.

In an embodiment, the fifth boundary surface (e.g. bs5) of the elongated element (e.g. g) is chemically adhered or glued or chemically cross-linked to the first boundary surface (e.g. bs1) of the first thermoplastic polymer layer (e.g. a1) over a first contact area; and the sixth boundary surface (e.g. bs6) of the elongated element (e.g. g) is chemically adhered or glued or chemically cross-linked to the fourth boundary surface (e.g. bs4) of the third thermoplastic polymer layer (e.g. a3) over a second contact area; wherein each of the first and the second contact area extend over a distance (e.g. d1) of at least 4 mm in a direction transversal to the longitudinal direction of the elongated element, (e.g. perpendicular to the respective edge of the panel).

The larger the contact area, the larger the force exerted upon the composite panel can be, before the chemical bound brakes, and the elongated element separates from the composite panel.

In embodiments, the distance d1 is smaller than 8 cm, or smaller than 7 cm, or smaller than 6 cm, or smaller than 5 cm, or smaller than 4 cm, or smaller than 3 cm, or smaller than 25 mm, or smaller than 20 mm.

In embodiments, the distance d1 is at least 5 mm, or at least 7 mm, or at least 10 mm, or at least 12 mm, or at least 15 mm, or at least 20 mm, or at least 25 mm, or at least 30 mm.

In embodiments, the distance d1 is substantially equal to the distance between the first and the third thermoplastic polymer layer (a1, a3) ± 20 mm, or ± 15 mm, or ± 10 mm, or ± 5 mm.

In embodiments, the distance d1 is substantially equal to the distance between the first and the third thermoplastic polymer layer (a1, a3) ± 20%, or ± 15%, or ± 10%, or ± 5%.

In embodiments, the distance d1 is substantially equal to the thickness (T2) of the second thermoplastic polymer layer (b) ± 20 mm, or ± 15 mm, or ± 10 mm, or ± 5 mm.

In embodiments, the distance d1 is substantially equal to the thickness (T2) of the second thermoplastic polymer layer (b) ± 20%, or ± 15%, or ± 10%, or ± 5%.

In an embodiment, the composite panel has an overall rectangular shape with four sides, and at least two of these sides comprise one or more elongated elements (e.g. g).

In embodiments, the composite panel has an overall rectangular shape with four sides, and at least three of the sides comprise one or more elongated elements.

In embodiments, the composite panel has an overall rectangular shape with four sides, and each of these four sides comprise one or more elongated elements.

In embodiments, the composite panel has an overall rectangular shape with four sides, and each of these four sides comprise one or more elongated elements, together extending over at least 50% of the length of each respective side, or at least 60%, or at least 70%, or at least 80%, or at least 90%.

In preferred embodiments, the composite panel has an overall rectangular shape with an area of at least 25 cm x 50 cm, or at least 25 cm x 100 cm, or at least 50 cm x 100 cm.

In embodiments, the first portion (g1) of the elongated element (g) has a thickness T4, and the second portion (g2) of the elongated element (g) has a largest thickness T5 that is equal to or smaller than T4.

In an embodiment, the first portion (e.g. g1) of the elongated element (e.g. g) has a thickness T4; and the elongated element (e.g. g) comprises a second portion (e.g. g2) having a thickness T5 larger than T4 forming a collar substantially abutting the first and the third thermoplastic polymer layers (e.g. a1, a3).

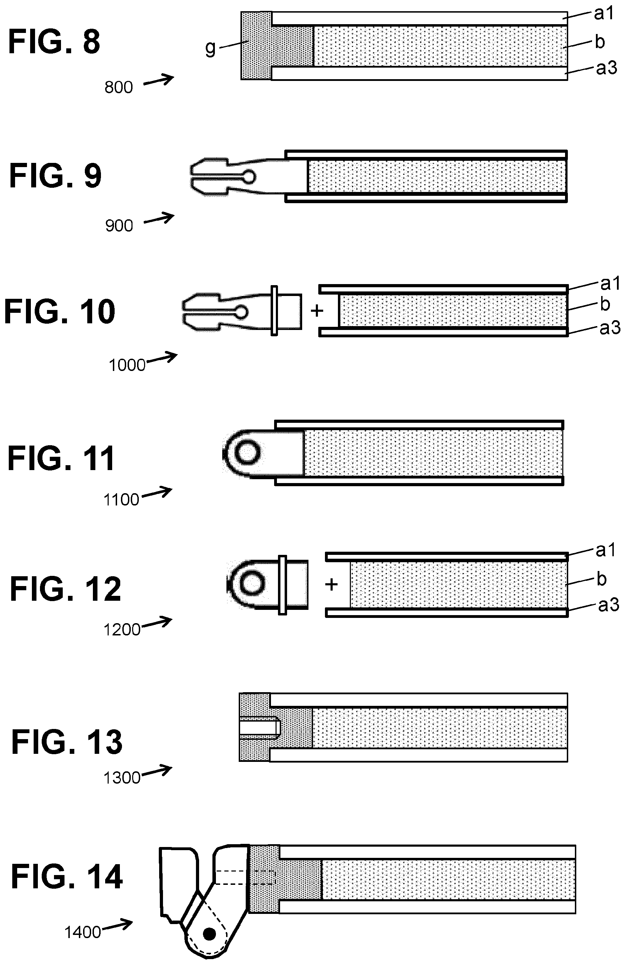

In an embodiment, the thickness T5 is equal to the total thickness Tp of the composite panel ±3 mm or ±2 mm or ±1 mm. Examples of an elongated element with a collar for abutting the first and third thermoplastic layers a1, a3 are shown in FIG. 10 and FIG. 12.

In an embodiment, the transversal cross section of the elongated element (e.g. g) has a cross-section with an overall T-shape, e.g. as illustrated in FIG. 8.

In an embodiment, the elongated element (e.g. g) comprises a snap-fit joint, for example a male snap-fit joint.

The "male snap-fit joint" may actually comprise two substantially flat profiles, spaced apart from each other so that their ends can move towards each other when being inserted in a female snap-fit joint, and each of the profiles may comprise "a hook", for engaging with the female snap fit joint.

Examples of such an elongated element are illustrated in FIG. 9, FIG. 10, FIG. 18, FIG. 20, FIG. 26 to FIG. 29, FIG. 44, and FIG. 49.

In an embodiment, the transversal cross section of the elongated element (e.g. g) comprises a female snap-fit joint, for example for receiving the two above mentioned adjacent male snap-fit profiles, without requiring an additional interconnection profile.

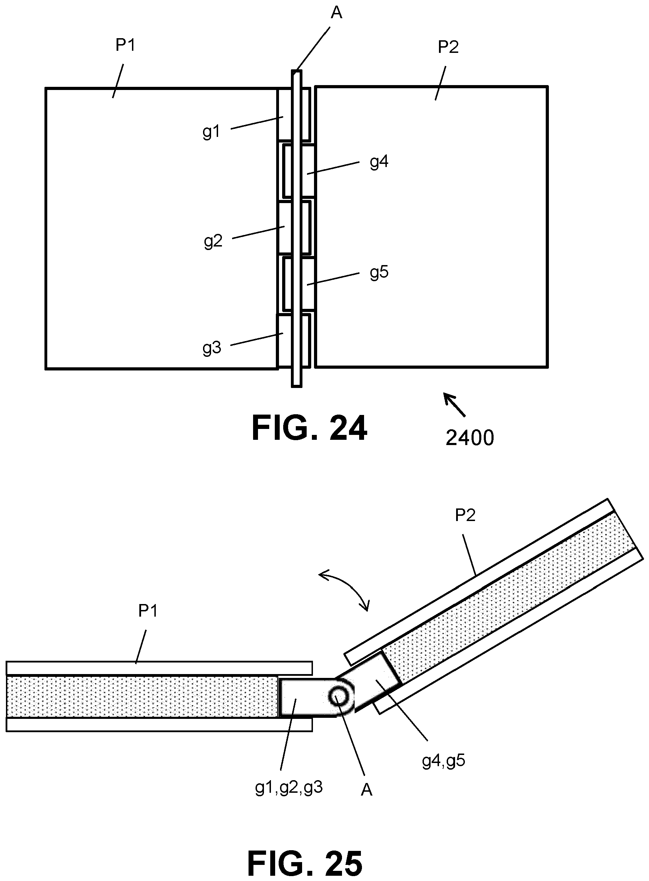

In an embodiment, the composite panel comprises at least one elongated element (e.g. g) having a second portion (e.g. g2) with a cylindrical through opening extending in a direction parallel to the side of the panel, for accommodating a cylindrical bar or rod, for forming an hinge. Examples of such panels are illustrated in FIG. 24 and FIG. 25.

In an embodiment, the first boundary surface (e.g. bs1) of the first thermoplastic polymer layer (e.g. a1) and the second (e.g. bs2) boundary surface of the second thermoplastic polymer layer (e.g. b) are chemically cross-linked using a composition (e.g. c); and the third boundary surface (e.g. bs3) of the second thermoplastic polymer layer (e.g. b) and the fourth (e.g. bs4) boundary surface of the third thermoplastic polymer layer (e.g. a3) are chemically cross-linked using said composition (e.g. c); and the first boundary surface (e.g. bs1) of the first thermoplastic polymer layer (e.g. a1) and the fifth boundary surface (e.g. bs5) of the elongated element (e.g. g) are chemically cross-linked using said composition (e.g. c); and the fourth boundary surface (e.g. bs4) of the third thermoplastic polymer layer (e.g. a3) and the sixth boundary surface (e.g. bs6) of the elongated element (e.g. g) are chemically cross-linked using said composition (e.g. c), wherein preferably the composition (e.g. c) comprises a thermoplastic elastomer and a monomer or oligomer for crosslinking said boundary surfaces.

In an embodiment, the first boundary surface (e.g. bs1) of the first thermoplastic polymer layer (e.g. a1) and the second boundary surface (e.g. bs2) of the second thermoplastic polymer layer (e.g. b) are chemically adhered or glued using an adhesive; and the third boundary surface (e.g. bs3) of the second thermoplastic polymer layer (e.g. b) and the fourth boundary surface (e.g. bs4) of the third thermoplastic polymer layer (e.g. a3) are chemically adhered or glued using said adhesive; and the first boundary surface (e.g. bs1) of the first thermoplastic polymer layer (e.g. a1) and the fifth boundary surface (e.g. bs5) of the elongated element (e.g. g) are chemically adhered or glued using said adhesive; and the fourth boundary surface (e.g. bs4) of the third thermoplastic polymer layer (e.g. a3) and the sixth boundary surface (e.g. bs6) of the elongated element (e.g. g) are chemically adhered or glued using said adhesive; wherein preferably said adhesive is a polyurethane adhesive or a polyurethane-based adhesive.

The polyurethane adhesive or polyurethane-based adhesive may comprise a single component, or a dual component, or multiple components.

In an embodiment, the first boundary surface (e.g. bs1) of the first thermoplastic polymer layer (e.g. a1) and the second boundary surface (e.g. bs2) of the second thermoplastic polymer layer (e.g. b) are chemically cross-linked using a composition (e.g. c); and the third boundary surface (e.g. bs3) of the second thermoplastic polymer layer (e.g. b) and the fourth boundary surface (e.g. bs4) of the third thermoplastic polymer layer (e.g. a3) are chemically cross-linked using said composition (e.g. c); and the first boundary surface (e.g. bs1) of the first thermoplastic polymer layer (e.g. a1) and the fifth boundary surface (e.g. bs5) of the elongated element (e.g. g) are chemically adhered or glued using an adhesive; and the fourth boundary surface (e.g. bs4) of the third thermoplastic polymer layer (e.g. a3) and the sixth boundary surface (e.g. bs6) of the elongated element (g) are chemically adhered or glued using said adhesive; wherein preferably the composition (e.g. c) comprises a thermoplastic elastomer and a monomer or oligomer for crosslinking said boundary surfaces; and wherein preferably said adhesive is a polyurethane adhesive or a polyurethane-based adhesive.

In an embodiment, the first boundary surface (e.g. bs1) of the first thermoplastic polymer layer (e.g. a1) and the second boundary surface (e.g. bs2) of the second thermoplastic polymer layer (e.g. b) are chemically adhered or glued using an adhesive; and the third boundary surface (e.g. bs3) of the second thermoplastic polymer layer (e.g. b) and the fourth boundary surface (e.g. bs4) of the third thermoplastic polymer layer (e.g. a3) are chemically adhered or glued using said adhesive; and the first boundary surface (e.g. bs1) of the first thermoplastic polymer layer (e.g. a1) and the fifth boundary surface (e.g. bs5) of the elongated element (e.g. g) are chemically cross-linked using a composition (e.g. c); and the fourth boundary surface (e.g. bs4) of the third thermoplastic polymer layer (e.g. a3) and the sixth boundary surface (e.g. bs6) of the elongated element (e.g. g) are chemically cross-linked using said composition (c); wherein preferably the composition (e.g. c) comprises a thermoplastic elastomer and a monomer or oligomer for crosslinking said boundary surfaces; and wherein preferably said adhesive is a polyurethane adhesive or a polyurethane-based adhesive.

In an embodiment, the adhesive may be selected from the group consisting of: "reactive hotmelt polyurethane (PUR), liquid polyurethane (LPU), thermoplastic polyurethane (PU film). It is noted that other adhesives or glues, such as Epoxy, Methyl acrylate may not satisfy the dynamic load requirements needed in the field of transportation.

In an embodiment, the first and second thermoplastic layers (e.g. a1 and b), and the second and third thermoplastic layers (e.g. b and a3) are chemically cross-linked in a manner similar as described in WO2022009185, for example by performing the following steps: providing a first thermoplastic polymer layer (a1) with at least one functional group ra; providing a second thermoplastic polymer layer (b) with at least one functional group rb, equal to or different from said functional group ra; providing a third thermoplastic polymer layer (a3) with at least one functional group ra; providing a composition c) comprising: c1) a thermoplastic polymer with at least one functional group rc, equal to or different from said functional group ra) and/or rb), and c2) a monomer or oligomer with at least two reactive functional groups rd1), rd2), preferably rd1) = rd2), wherein rd1) and rd2) are selected for reactivity with the functional groups ra), rb) and rc); reacting said at least two functional groups rd1), rd2) of the monomer or the oligomer with said functional groups ra), rb), rc), thereby cross-linking the first boundary surface (bs1) of the first layer (a1), the second boundary surface (bs2) of the second layer (b) and the thermoplastic polymer c1), and thereby cross-linking the third boundary surface (bs3) of the second layer (b), the fourth boundary surface (bs4) of the third layer (a3) and the thermoplastic polymer c1).

In an embodiment, a polyamide in the first layer a1 and in the third layer a3 is chemically cross-linked to a polyester in layer b) and a c1) thermoplastic polymer from composition c). More preferably, c1) is a thermoplastic polyurethane; most preferably a thermoplastic polyurethane elastomer. Most preferably, c2) is a diisocyanate or polyisocyanate.

The thermoplastic polymer c1) may be a thermoplastic polyurethane elastomer.

The monomer or oligomer may be an epoxide, an aziridine, a carbodiimide, a polyisocyanate, a polyamine, a polyol, or an ethylene vinyl acetate (EVA).

Preferably, the weight ratio of monomer or oligomer to thermoplastic elastomer is between 95: 1 and 1:95, expressed with respect to the total weight of monomer or oligomer and thermoplastic elastomer.

Preferably, at least one functional group ra) and/or rb) is selected from an OH-group, an SH-group, an NH-group, an NH2-group, a carboxyl group.

In an embodiment, a polyamide in the first layer a1 and the third layer a3 is cross-linked with a polyester in the second layer (b) and a thermoplastic polyurethane elastomer from composition (c).

In an embodiment, each of the first thermoplastic polymer layer (e.g. a1) and the third thermoplastic polymer layers (e.g. a3) is fibre-reinforced, preferably reinforced by fibres selected from glass fibres, aramid fibres, carbon fibres, basalt fibres, polyethylene fibres, polyester fibres, polyamide fibres, ceramic fibres, steel fibres, vegetable fibres, or combinations thereof.

In an embodiment, each of the first and the third thermoplastic polymer layers (e.g. a1, a3) are Nylon 6 Organosheets, commercially available from the company "Johns Manville". The organosheet layers of Johns Manville may consist of a glass fibre reinforced polyamide-6 or nylon-6 matrix. The polyamide is connected to the glass fibres. This material structure offers good mechanical properties. The organosheet layers may each have a thickness of 3 mm and the fibres may have an orientation of 0° (50%) and 90° (50%).

In an embodiment, T1=2 mm and T3=2mm. In another embodiment T1=2 mm and T3=3 mm. In another embodiment T1=3 mm and T3=2 mm. In another embodiment, T1=3 mm and T3=3 mm.

In an embodiment, said second thermoplastic polymer layer (e.g. b) is selected from: a foamed second thermoplastic polymer layer, a fibre-reinforced second thermoplastic polymer layer, a foamed and fibre-reinforced second thermoplastic polymer layer, a thermoplastic polymer layer with a honeycomb structure.

In an embodiment, the second thermoplastic polymer layer (e.g. b) is a foamed polyester polymer layer, more preferably a polyethylene terephthalate (PET) foam or polyethylene furanoate (PEF) foam layer. The second layer may have a foam density of 210 to 250 kg/m³, e.g. equal to about 210 kg/m³, or equal to about 220 kg/m³, or equal to about 230 kg/m³, or equal to about 240 kg/m³.

According to a second aspect, the present invention also provides a method of producing a composite panel comprising an elongated element, e.g. an edge profile, with load bearing capacity, the method comprising the steps of: i) providing a first thermoplastic polymer layer (e.g. a1) having a first boundary surface (e.g. bs1); ii) providing a second thermoplastic polymer layer (e.g. b) having a second boundary surface (e.g. bs2) and a third boundary surface (e.g. bs3); iii) providing a third thermoplastic polymer layer (e.g. a3) having a fourth boundary surface (e.g. bs4); iv) providing an elongated element (e.g. g) having a transversal cross section with a first portion (e.g. g1) and optionally a second portion (e.g. g2), the first portion (e.g. g1) having a fifth boundary surface (e.g. bs5) and a sixth boundary surface (e.g. bs6); v) positioning the second thermoplastic polymer layer layer (e.g. b) between the first (e.g. a1) and the third thermoplastic polymer layer (e.g. a3), such that the first and the third thermoplastic polymer layer (e.g. a1, a3) extend further than the second thermoplastic polymer layer (e.g. c) by a predefined distance (e.g. E1); vi) positioning the elongated element (e.g. g) such that its first portion (e.g. g1) is situated between the first and the third thermoplastic polymer layer (a1, a3), and optionally such that its second portion (e.g. g2) is situated outside of the first and the third thermoplastic polymer layer (a1, a3); vii) chemically glueing or chemically adhering or chemically cross-linking the first (e.g. bs1) and the second boundary surface (e.g. bs2) using an adhesive or a composition (e.g. c); viii) chemically glueing or chemically adhering or chemically cross-linking the third (e.g. bs3) and the fourth boundary surface (e.g. bs4) using an adhesive or a composition (e.g. c); ix) chemically glueing or chemically adhering or chemically cross-linking a fifth (bs5) and the first boundary surface (bs1) using an adhesive or a composition (e.g. c); x) chemically glueing or chemically adhering or chemically cross-linking the sixth (e.g. bs6) and the fourth boundary surface (e.g. bs4) using an adhesive or a composition (e.g. c).

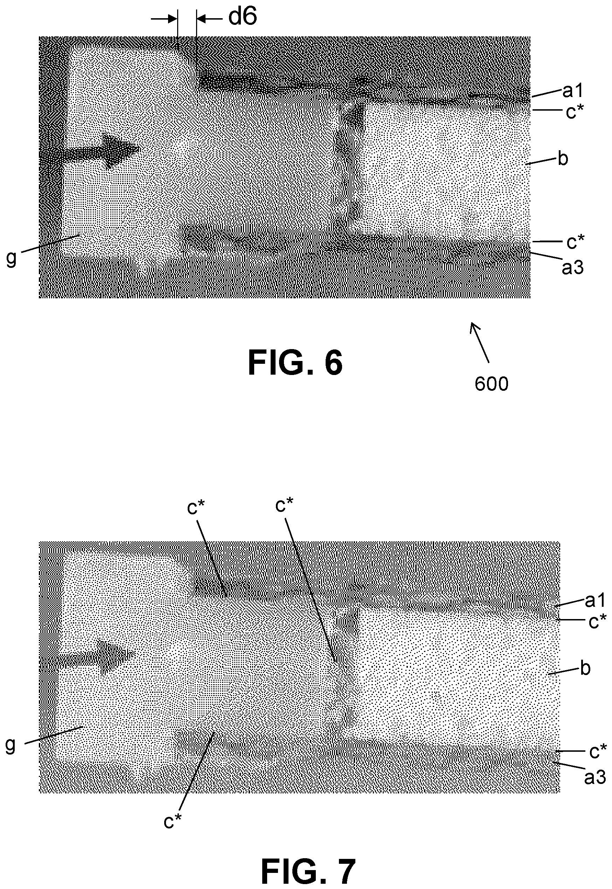

These above mentioned steps may be performed in various orders. A first example is shown in FIG. 6, a second example is shown in FIG. 7, but the present invention is not limited to these examples.

In an embodiment, the steps vii) and viii), and/or the steps ix) and x) are preferably performed simultaneously, for example in a press, while applying a pressure of at least 0.20 bar, or at least 0.25 bar, or at least 0.30 bar, or at least 0.40 bar but preferably smaller than 5.0 bar on the first and the third thermoplastic layers a1, a3, and preferably at a temperature in the range from 30°C to 120°C, or from 35°C to 100°C, or from 40°C to 80°C, for example at a temperature of about 100°C ±20°C, or at a temperature of about 90°C ±20°C, or at a temperature of about 80°C ±20°C.

In an embodiment, the steps vii) and viii) are performed during a first time period, and the steps ix) and x) are performed in a second time period, following the first time period.

According to a third aspect, the present invention also provides an assembly, comprising: a first composite panel (e.g. P1) according to the first aspect, having a first elongated element (e.g. a first male snap-fit joint); a second composite panel (e.g. P2) according to the first aspect, having a second elongated element (e.g. also a first male snap-fit joint); wherein the first elongated element is mechanically connected to the second elongated element, directly or indirectly, e.g. by means of an interconnection profile (IP), or an interconnection element (IE).

The mechanical connection may be a fixed connection (e.g. a male snap-fit joint mechanically engaged with a female snap-fit joint), or may be rotatable connection (e.g. as illustrated in any of FIG. 11, FIG. 12, FIG. 14, FIG. 24, FIG. 25, FIG. 37)
In an embodiment, the assembly comprises a first panel having a first elongated element with a male snap-fit joint, and a second panel having a second elongated element with a female snap-fit joint.

In an embodiment, each of said at least two composite panels comprises one or more elongated elements having a second portion with a cylindrical through opening extending in the longitudinal direction of the elongated element, for receiving a cylindrical rod for forming an hinge.

In an embodiment, the assembly comprises: a first composite panel (e.g. P1) according to the first aspect, having at least one side (e.g. S1) with a first elongated element with a first male snap-fit joint (e.g. M1); a second composite panel (e.g. P2) according to the first aspect, having at least one side (e.g. S2) with a second elongated element with a second male snap-fit joint (e.g. M2); an interconnection profile (e.g. IP17, IP42) having a first female snap-fit-joint (e.g. F1) for receiving the first male snap-fit joint (e.g. M1), and having a second female snap-fitjoint (e.g. F2) for receiving the second male snap-fit joint (e.g. M2).

Depending the shape of the interconnection profile, the first composite panel and the second composite panel may be oriented parallel to each other, or perpendicular to each other.

In an embodiment, the assembly comprises: a first composite panel (e.g. P1) (e.g. bottom panel) according to the first aspect, having at least one side (e.g. S1) with a first male snap-fit joint (e.g. M1) and a second side (e.g. S2), opposite the first side, with a second male snap-fit joint (e.g. M2); a first interconnection profile (e.g. IP1) having a first female snap-fit joint (e.g. F1) engaged with the first male snap-fit joint (e.g. M1) of the first composite panel (e.g. P1), and having a second female snap-fit joint (e.g. F2); a second composite panel (e.g. P2) (e.g. first side panel) according to the first aspect, having at least one side (e.g. S3) with a male snap-fit joint (e.g. M3) engaged with the second female snap fit joint (e.g. F2) of the first interconnection profile (e.g. IP1); a second interconnection profile (e.g. IP2) having a first (e.g. F3) female snap-fit joint (e.g. F3) engaged with the second male snap-fit joint (e.g. M2) of the first composite panel (e.g. P1), and having a second female snap-fit joint (e.g. F4); a third composite panel (e.g. P3) (e.g. second side panel) according to the the first aspect, having at least one side (e.g. S4) with a male snap-fit joint (e.g. M4) engaged with the second female snap fit joint (e.g. F4) of the second interconnection profile (e.g. IP2).

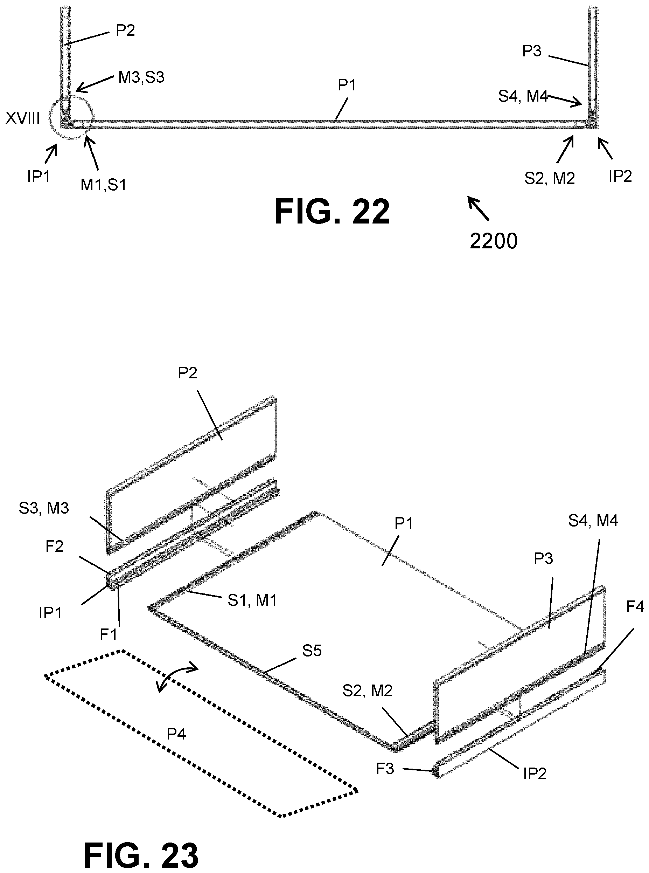

In an embodiment, the first and the second composite panels are oriented perpendicular to each other, and the first and the third composite panel are oriented perpendicular to each other, e.g. as illustrated in FIG. 22.

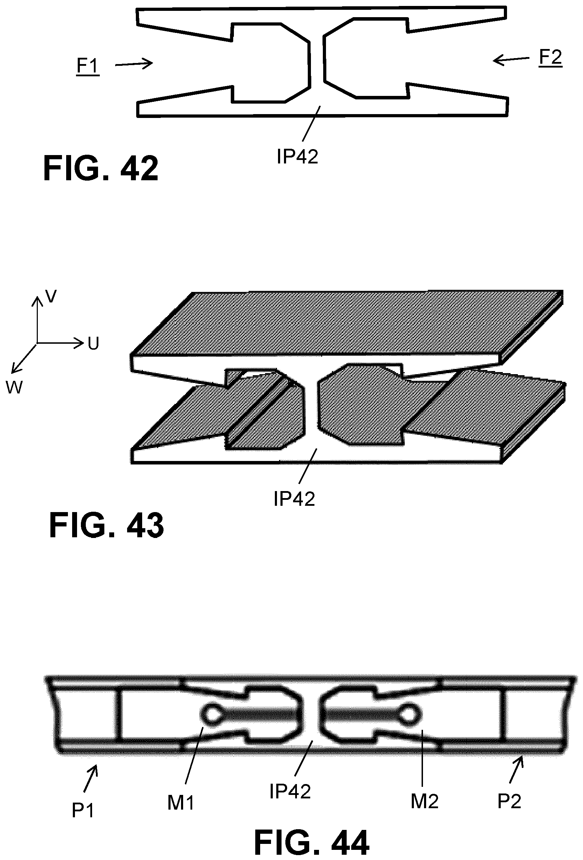

In an embodiment, the first, second and third composite panels are substantially parallel to each other, e.g. as illustrated in FIG. 44.

In an embodiment, the assembly comprises: a first composite panel (e.g. P1) (e.g. bottom panel) according to the first aspect, having at least three sides (e.g. S1, S2, S3) with a male snap-fit joint (e.g. M1, M2, M3); a second composite panel (e.g. P2) (e.g. first side panel) according to the first aspect, having two adjacent sides (e.g. S4, S5) each with a male snap-fit joint (e.g. M4, M5); a third composite panel (e.g. P3) (e.g. second side panel) according to the first aspect, having two adjacent sides (e.g. S6, S7) each with a male snap-fit joint (e.g. M6, M7); a fourth composite panel (e.g. M4) (e.g. a back panel) according to the first aspect, having at least three sides (e.g. S8, S9, S10) with a male snap-fit joint (e.g. M8, M9, M10); a first interconnection element (e.g. IE1) having six female snap-fit joints for engaging with two male snap-fit joints (e.g. M1, M2) at a first corner of the first composite panel (e.g. P1), and for engaging with two male snap-fit joints (e.g. M4, M5) at a corner of the second composite panel (e.g. P2), and for engaging with two male snap-fit joints (e.g. M8, M9) at a first corner of the fourth composite panel (e.g. P4); a second interconnection element (e.g. IE2) having six female snap-fit joints for engaging with two male snap-fit joints (e.g. M2, M3) at a second corner of the first composite panel (e.g. P1), and for engaging with two male snap-fit joints (e.g. M6, M7) at a corner of the third composite panel (e.g. P3), and for engaging with two male snap-fit joints (e.g. M8, M10) at a second corner of the fourth composite panel (e.g. P4).

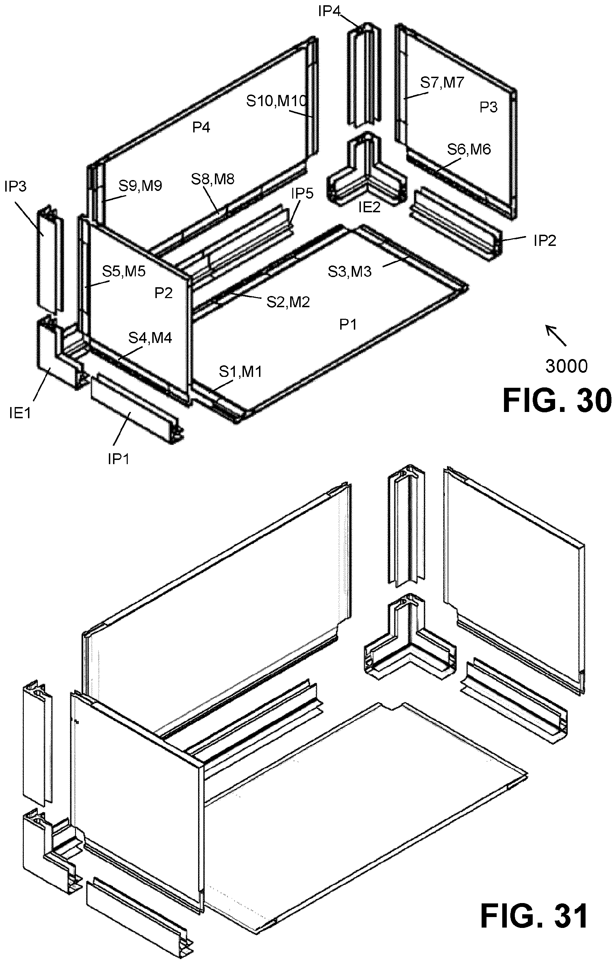

An example of such an assembly is illustrated in FIG. 30. It is noted that the assembly does not absolutely require interconnection profiles, but it may. In a variant, the interconnection elements have longer legs than the ones shown in FIG. 30. This could also be regarded as the interconnection profiles being integrally formed with the interconnection elements. Each of the first and second interconnection element is capable of holding three panels in three orthogonal planes XY, YZ, XZ.

In an embodiment, the assembly further comprises one or more, e.g. five elongated interconnection profiles (e.g. IP1 to IP5), each having two female snap-fit joints for engaging with corresponding male snap-fit joints of two of said composite panels. For example, a first interconnection profile IP1 for engaging with M1 (of P1) and M4 (of P2), a second interconnection profile IP2 for engaging with M3 (of P1) and M6 (of P3), a third interconnection profile IP3 for engaing with M5 (of P2) and M9 (of P4), a fourth interconnection profile IP4 for engaging with M7 (of P3) and M10 (of P4), and a fifth interconnection profile IP5 for engaging with M2 (of P1) and M8 (of P4).

In an embodiment, the assembly comprises: a first composite panel (e.g. P1) according to the first aspect, having at least one side (e.g. S1) with a male snap-fit joint (e.g. M1); a second composite panel (e.g. P2) according to the first aspect, having two adjacent sides (e.g. S2, S3) each with a male snap-fit joint (e.g. M2, M3); a third composite panel (e.g. P3) according to the first aspect, having two adjacent sides (e.g. S4, S5) each with a male snap-fit joint (e.g. M4, M5); an interconnection element (e.g. IE1) having a cross-section with an overall T-shape, and having five female snap-fit joints, including a first female snap fit joint for engaging with the first male snap fit joint (e.g. M1) of the first panel, and a second and third female snap fit joint (e.g. F2, F3) for engaging with two male snap-fit joints (e.g. M2, M3) of two orthogonal sides (e.g. S2, S3) at a corner of the second composite panel (e.g. P2), and a fourth and fifth female snap fit joint (e.g. F4, F5) for engaging with two male snap-fit joints (e.g. M4, M5) of two orthogonal sides (e.g. S4, S5) at a corner of the third composite panel (e.g. P3).

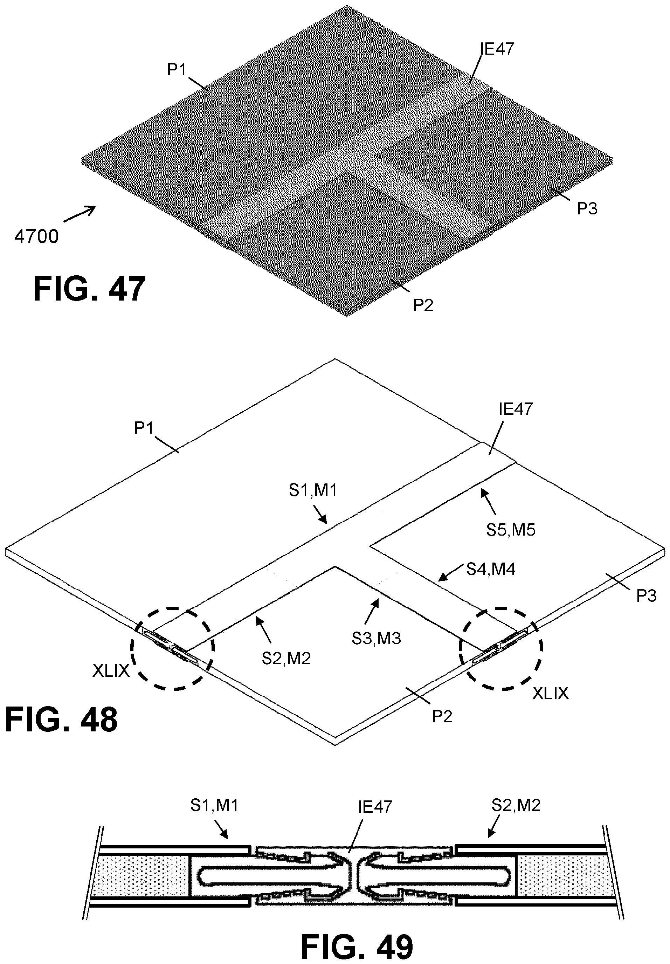

Examples of such an assembly are illustrated in FIG. 47 to FIG. 52B. Depending on the length of the legs of the interconnection element, the assembly may or may not comprise additional interconnection profiles.

In an embodiment, the assembly is, or is part of a container, e.g. a railway container or a shipping container.

In an embodiment, the assembly is, or is part of a cargo box for a transport vehicle.

In an embodiment, the assembly is, or is part of a shelter.

In an embodiment, the assembly is, or is part of a box or a crat, for example for shipping goods.

According to another aspect, the present invention also provides a landing platform, e.g. a mobile landing platform, e.g. a landing platform for a cargo-drone, a landing platform for a flying vehicle (e.g. a flying car), a landing platform for a helicopter (known as a "helipad"), a runway, a landing strip, airfield matting etc., comprising one or more composite panels according to the first aspect, or comprising an assembly according to the second aspect.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

**FIG. 1A** shows a cross-section of a first illustrative example of a composite panel according to an embodiment of the present invention. The composite panel comprises three thermoplastic polymer layers and at least one elongated element (e.g. elongated element) situated near an edge or side of the panel.
**FIG. 1B** shows the elongated element used in FIG. 1A.
**FIG. 1C** shows a 3D perspective view of the elongated element used in FIG. 1A.
**FIG. 2** shows the composite panel of FIG. 1A with an indication of boundary surfaces.
**FIG. 3** shows a second illustrative example of a composite panel according to an embodiment of the present invention.
**FIG. 4** shows an illustrative test sample, having an elongated element as illustrated in FIG. 3.
**FIG. 5** shows the results of a tensile test performed on the test sample of FIG. 4.
**FIG. 6** is a dithered picture showing a portion of a test sample shown in FIG. 4, constructed as illustrated in FIG. 3.
**FIG. 7** shows the same picture as FIG. 6, but slightly brighter, for illustrative purposes.
**FIG. 8** is a simplified drawing of a composite panel proposed by the present invention, having the same or similar elongated element as used in FIG. 1A or FIG. 2 or FIG. 3.
**FIG. 9** shows a variant of FIG. 8, wherein the elongated element comprises a male snap fit joint.
**FIG. 10** shows a variant of FIG. 9, wherein the elongated element furthermore comprises a collar, the elongated element is shown separate from the layers, for illustrative purposes.
**FIG. 11** shows another variant of FIG. 8, wherein the elongated element comprises a through-opening extending in a direction parallel to the edge of the panel.
**FIG. 12** shows a variant of FIG. 11, wherein the elongated element furthermore comprises a collar, the elongated element is shown separate from the layers, for illustrative purposes.
**FIG. 13** shows another variant of FIG. 8, wherein the elongated element comprises a blind hole extending in a direction perpendicular to the edge of the panel, with an internal screw thread.
**FIG. 14** shows a further variant of FIG. 13, further comprising a hinge, screwed to the elongated element.
**FIG. 15** shows a flow-chart of a method of producing a composite panel, according to an embodiment of the present invention.
**FIG. 16** shows a flow-chart of a method of producing a composite panel, according to another embodiment of the present invention.
**FIG. 17** shows a cross-section of an illustrative example of an interconnection profile having two female snap-fit joints, as can be used in embodiments of the present invention, for interconnecting two composite panels at an angle of 90°.
**FIG. 18** shows the interconnection profile of FIG. 17 mechanically engaged with two composite panels, each having a male snap-fit joint.
**FIG. 19** shows a perspective view of the interconnection profile of FIG. 17.
**FIG. 20** shows a perspective view of the interconnection profile of FIG. 18 engaged with two male snap-fit joints, (but without the composite panels).
**FIG. 21** shows another interconnection profile, as can be used in embodiments of the present invention.
**FIG. 22** shows an illustrative example of an assembly, according to an embodiment of the present invention, in cross-section. The assembly comprises three composite panels fixedly connected to each other by means of two interconnection profiles.
**FIG. 23** shows an exploded view of FIG. 22.
**FIG. 24** shows an illustrative example of another assembly, according to another embodiment of the present invention, in top view. The assembly comprises two composite panels pivotally connected to each other.
**FIG. 25** shows the assembly of FIG. 24 in side view.
**FIG. 26** shows an exploded view of an illustrative example of an interconnection element having six female snap-fit joints, as can be used in embodiments of the present invention, for interconnecting three composite panels, at angles of 90°.
**FIG. 27** shows the interconnection element of FIG. 26 in perspective view, engaged with three pairs of two adjacent male snap-fit joints, at the corners of three composite panels.
**FIG. 28** shows a variant of FIG. 26, illustrating another example of an interconnection element having six female snap-fit joints for interconnecting three composite panels, in perspective view.
**FIG. 29** shows a perspective view of the interconnection element of FIG. 28 in mechanical engagement with six male snap-fit joints situated at the corners of three composite panels.
**FIG. 30** shows an illustrative example of an assembly, according to another embodiment of the present invention, in exploded view. The assembly comprises four composite panels fixedly connected to each other by means of five interconnection profiles, and two interconnection elements, arranged to form an open box.
**FIG. 31** shows the assembly of FIG. 30 with thin lines, for illustrative purposes.
**FIG. 32** shows a dithered picture of the box of FIG. 30 and FIG. 31, in top perspective view.
**FIG. 33** shows the box of FIG. 32 in line drawings.
**FIG. 34** shows a dithered picture of the box of FIG. 30 and FIG. 31, in bottom perspective view.
**FIG. 35** shows the box of FIG. 34 in line drawings.
**FIG. 36** shows an example of another assembly according to an embodiment of the present invention. The assembly comprises six composite panels fixedly connected to each other to form a box having a bottom and four side walls and a top panel. The top panel may have an opening, and optionally a hatch or a door.
**FIG. 37** shows an example of another assembly according to an embodiment of the present invention. The assembly comprises five composite panels fixedly connected to each other to form a box having a bottom and four side walls, and a lid in the form of a sixth composite panel which is pivotally connected to the back panel or to an interconnection profile.
**FIG. 38** shows another illustrative example of an assembly according to an embodiment of the present invention. This assembly comprises five composite panels fixedly connected to each other to form a box having a bottom and three side walls and a top panel. One of the side walls (on the right side of FIG. 38) is omitted.
**FIG. 39** shows an example of FIG. 38, in the form of a cargo box of a truck, with two back doors.
**FIG. 40** and **FIG. 41** show another example of FIG. 38, in the form of a shelter. FIG. 40 is a dithered picture. **FIG. 41** shows another representation.
**FIG. 42** shows a cross-section of an illustrative example of an interconnection profile having two female snap-fit joints, as can be used in embodiments of the present invention, for interconnecting two composite panels at an angle of 180°.
**FIG. 43** shows a perspective view of the interconnection profile of FIG. 42.
**FIG. 44** shows the interconnection profile of FIG. 42 mechanically engaged with two composite panels, each having a male snap-fit joint.
**FIG. 45** shows an assembly according to another embodiment of the present invention, in the form of a one-dimensional array of composite panels mechanically connected to each other, for example using an interconnection profile as illustrated in FIG. 42.
**FIG. 46A** shows an assembly according to another embodiment of the present invention, in the form of a two-dimensional array of composite panels mechanically connected to each other, for example using interconnection profiles as illustrated in FIG. 42.
**FIG. 46B** shows a variant of FIG. 46A.
**FIG. 47** and **FIG. 48** show an assembly according to another embodiment of the present invention, comprising three composite panels, mechanically connected to each other by means of a T-shaped interconnection element having five female snap-fit joints. (see also FIG. 50 and FIG. 51). FIG. **47** shows the assembly as a dithered picture. **FIG. 48** shows a line drawing.
**FIG. 49** shows an enlarged view of the cross-section of the T-shaped interconnection element mechanically engaged with two male snap-fit joints of two panels.
**FIG. 50** and **FIG. 51** show a variant of FIG. 47 as another embodiment of the present invention, using a T-shaped interconnection element with relatively short legs, and using three interconnection profiles as shown in FIG. 42. **FIG. 50** shows a dithered picture. **FIG. 51** shows a line drawing.
**FIG. 52A** shows an illustrative example of an assembly according to another embodiment of the present invention, in the form of a two-dimensional array of composite panels forming an airfield matting. The composite panels are mechanically interconnected by means of T-shaped interconnection elements and by interconnection profiles as shown in FIG. 50 and FIG. 51. As can be seen, the composite panels in adjacent rows are preferably offset by approximately half a panel.
**FIG. 52B** shows a variant of FIG. 52A.
**FIG. 53** shows another illustrative example of an assembly according to another embodiment of the present invention, in the form of a two-dimensional array of composite panels forming an airfield matting, using only linear interconnection profiles (not T-shaped interconnection elements).
**FIG. 54** shows an example of a helicopter on a helipad.

The drawings are only schematic and are non-limiting. In the drawings, the size of some of the elements may be exaggerated and not drawn on scale for illustrative purposes. Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

The terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In the context of the present invention, the expressions "side of a panel" and "edge of a panel" mean the same.

The present invention relates in general to the field of composite panels, and to assemblies comprising composite panels, and to method of producing such panels. More specifically, the invention relates to composite panels comprising one or more edge profiles or elongated elements located near one or more sides of the composite panel, firmly connected to the composite panel such that they have load bearing capacity. And to assemblies comprising such composite panels. And to methods of producing such composite panels.

### Referring to the Figures.

**FIG.** 1A shows a cross-section of a first illustrative example of a composite panel 100. The composite panel 100 comprises three thermoplastic polymer layers a1, b, a3 and at least one elongated element g situated near an edge or side of the panel 100. The elongated element is also referred to herein as "insert", for reasons that will become clear further. The elongated element g may have a constant cross-section over its entire length (in this case typically referred to an "elongated profile"), but that is not absolutely required, and it may also have a variable cross-section.

The main purpose of FIG. 1A is to illustrate that the composite panel 100 comprises: a first (a1), a second (b), and a third (a3) thermoplastic polymer layer stacked on top of each other, and pairwise glued or chemically adhered or chemically cross-linked to each other; the first and third layer (a1, a3) extending further than the second layer (b). The composite panel 100 further comprises an elongated element (g) situated near an edge or side of the panel. According to an important aspect of the present invention: the elongated element has a first portion (g1), also referred to herein as "interior portion of the elongated element", situated between the first and third layer (a1, a3), and has a second portion (g2), also referred to herein as "exterior portion of the elongated element", situated outside of the first and third layer (a1, a3). The first portion (g1) of the elongated element g is glued or chemically adhered or chemically cross-linked to the first (a1) and third (a3) thermoplastic polymer layer.

It is a major advantage that the elongated element can be chemically connected to and on the inside of the composite panel, hence the outer top and bottom surfaces of the panels remain flat, and do not require openings or screw or bolts or rivets or the like.

Describing first on the mechanical aspects, FIG. 1A shows that the elongated element g is situated near an edge (or side) of the composite panel. While not explicitly shown, the elongated element may have the same length as the panel, or a smaller length, or even a larger length. While FIG. 1A shows a panel having only one elongated element situated on one side of the panel, it is of course also possible to provide one or more elongated elements on other sides of the composite panel. For example, the composite panel P1 of FIG. 23 has two elongated elements, a first one on side S1, and a second one on side S2.

Referring back to FIG. 1A, there is a small cavity between the elongate profile g and the second thermoplastic layer b, but in practice this cavity is preferably as small as possible, (in the sense that, ideally d1=E1). The cavity is shown in FIG. 1A merely to illustrate that a first adhesive or composition c can be used for cross-linking the thermoplastic layers a1, b and b, a3 to each other, and a second adhesive or composition d, equal to or different from composition c, can be used for chemically glueing or cross-linking the elongated element g to the thermoplastic layers a1 and a3. In preferred embodiments, the distances E1, E3 are equal or substantially equal to each other, and the distance d1 is preferably equal or substantially equal to E1 and to E3.

**FIG. 1B** shows a transversal cross-section of the elongated element used in FIG. 1A, and **FIG. 1C** shows a 3D perspective view of the elongated element used in FIG. 1A.

**FIG. 1B** shows the first portion g1 having a thickness T4 small enough so that it fits between the first and third thermoplastic polymer layers a1, a3; and a second portion g2 which may have a thickness T5 larger than T4, although that is not absolutely required. The thickness T4 of the first portion g1 of the elongated element g is preferably chosen substantially equal to the thickness T2 of the second thermoplastic polymer layer b within a predefined tolerance margin, e.g. within a tolerance margin of ±20%, or ±15%, or ±10%, or ±5%, or within an absolute tolerance margin of ±3 mm, or ±2 mm, or ±1 mm. As can be seen, the first portion g1 has a first area g1a for glueing or chemical adhering or chemical cross-linking with the first thermoplastic polymer layer a1, and a second area gib for glueing or chemical adhering or chemical cross-linking with the third thermoplastic polymer layer a3.

The width Wg1 of this area may be chosen as a function of the envisioned load-bearing capacity of the elongated element. As a rule of thumb: the larger this width, the higher the force (e.g. lateral force and/or torque) it is capable to withstand before separating from the rest of the composite panel. The width Wg1 is preferably a value in the range from 3 mm to 90 mm, or from 4 mm to 80 mm, or from 5 mm to 70 mm, or from 5 mm to 60 mm, or from 5 mm to 50 mm, or from 5 mm to 40 mm, or from 5 mm to 30 mm, or from 5 mm to 20 mm, or from 5 mm to 17 mm, or from 5 mm to 15 mm, or from 5 mm to 12 mm, or from 5 mm to 10 mm.

In the embodiment shown in FIG. 1A to FIG. 1C, the elongated portion has a transversal cross section with an overall T-shape, but the present invention is not limited thereto, and other shapes can also be used. Some other examples will be discussed further (see e.g. FIG. 8 to FIG. 14).

In preferred embodiments, the first and third thermoplastic layers a1, a3 are organosheets, and the second layer is a foam layer, e.g. a PET foam with closed cell structures, wherein the organosheets are chemically connected to the foam layer by means of glue or an adhesive, preferably using a PU-adhesive or a polyurethane-based adhesive, or by means of chemical cross-linking, preferably using a composition c, also referred to herein as "CIB" which stands for Covalent Intermediate Bonding.

The elongated element g can be made of a thermoplastic material, e.g. selected from the group consisting of polyamide or nylon, e.g. PA6, or polyester, or PET, or may comprise or consist of aluminum or an aluminum alloy. It was surprisingly found that (an) elongated element(s) made of these materials can be connected to the first and third thermoplastic layers (a1, a3) in a surprisingly strong manner. In particular embodiments, the elongated element is an extruded aluminum profile.

It is noted that the drawing is not drawn to scale. Typical dimensions for T1 and T3 are in the order of about 1 to 3 mm. Typical dimensions for T2 are in the order of about 15 to 40 mm. During the production of the composite panel, an adhesive or a composition c may be applied, for example in viscous form or in liquid form, but after the chemical reaction, the interconnection layer may no longer be visible as a separate layer. For this reason, these interconnection layers are indicated by c* and d*, again, for indicating to the reader that "during manufacturing" these layers may be glue or an adhesive or a liquid, but after production, these layers may be a cured adhesive, or may transformed and perhaps even no longer be visible as such. See for example FIG. 6 and FIG. 7.

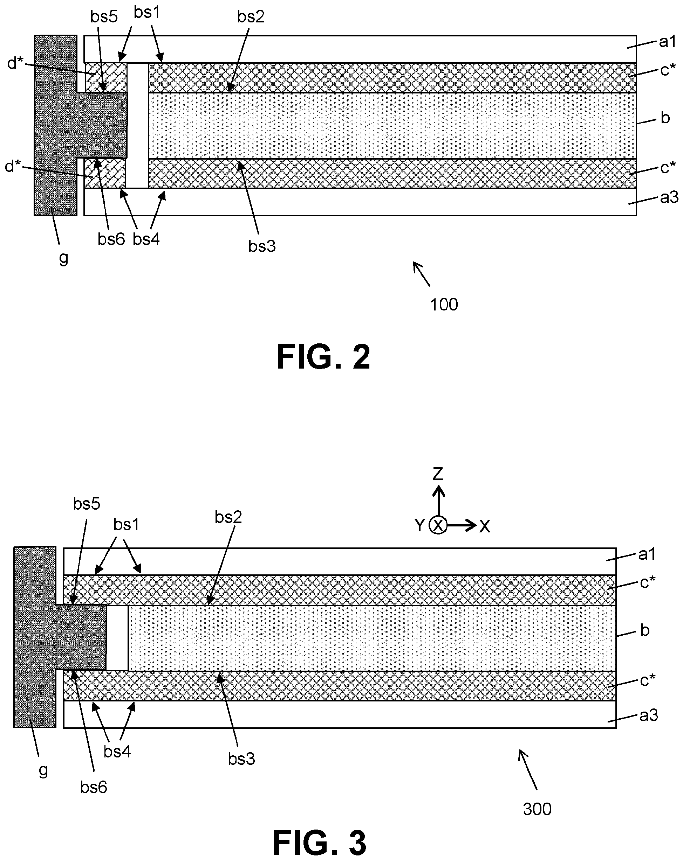

**FIG. 2** shows the same composite panel of FIG. 1A, with an indication of boundary surfaces, which are chemically cross-linked to each other.

More specifically, the composite panel 100 comprises: a first thermoplastic polymer layer (a1) having a first boundary surface (bs1); a second thermoplastic polymer layer (b) having a second boundary surface (bs2) and a third boundary surface (bs3); a third thermoplastic polymer layer (a3) having a fourth boundary surface (bs4). The second thermoplastic polymer layer (b) is situated between the first (a1) and the third thermoplastic polymer layer (a3).

The first boundary surface (bs1) is glued or chemically adhered or chemically cross-linked to the second boundary surface (bs2) by means of a first cross-linking layer (c*), which is formed during production of the composite panel using a composition (c). Likewise, the third boundary surface (bs3) is glued or chemically adhered or chemically cross-linked to the fourth boundary surface (bs4) by means of a cross-linking layer (c*) which is the result of reacting with an adhesive or a composition (c).

The first portion (g1) of the elongated element (g) has a fifth boundary surface (bs5) that is chemically cross-linked to the first boundary surface (bs1) of the first thermoplastic polymer layer (a1), and has a sixth boundary surface (bs6) that is chemically cross-linked to the fourth boundary surface (bs4) of the third thermoplastic polymer layer (a3), both by means of a second cross-linking layer (d*), which is the result of reacting with an adhesive or a composition (d).

The first cross-linking layer c* may have the same or a different chemical composition as the second cross-linking layer d*.

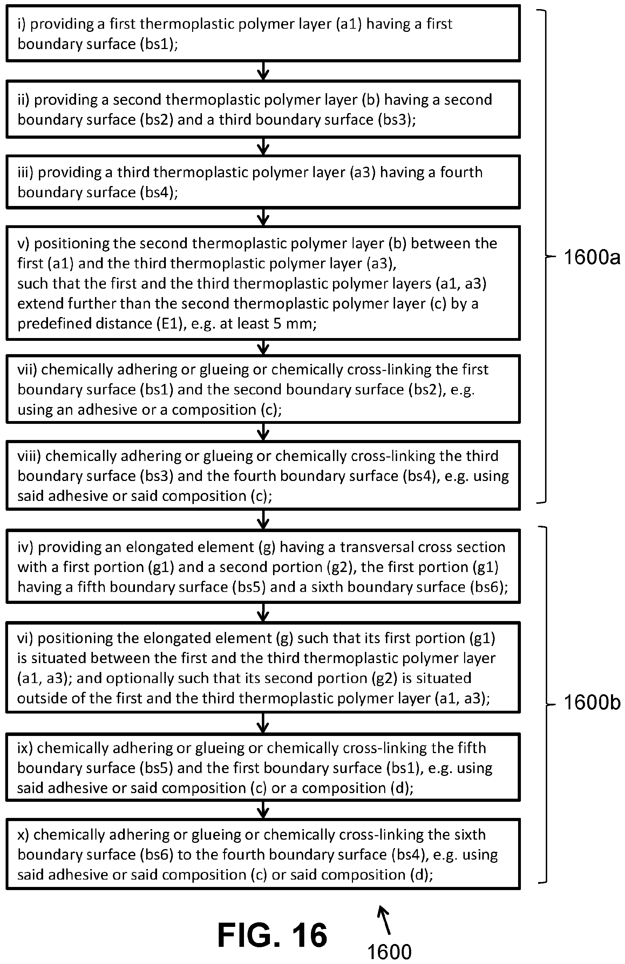

The first cross-linking layer c* and the second cross-linking layer d* may be formed substantially at the same time, during the production of the composite panel with the elongated element (as suggested by the sequence of steps of the method of FIG. 15), but that is not absolutely required, and it is also possible to first form a composite panel without the elongated element, e.g. in the series of steps 1600a of FIG. 16, but with the second layer (b) already shifted inwardly; and to add the elongated element afterwards, e.g. in the series of steps 1600b of FIG. 16, using the same composition c that was used in the first series 1600a, or using a different composition d, e.g. a polyurethane-based glue or a polyurethane-based adhesive.

**FIG. 3** shows an illustrative example of a composite panel 300, as may be formed by performing a process shown in FIG. 15, using a composition (c) not only for cross-linking the first boundary surface bs1 to the second boundary surface bs2, and the fourth boundary surface bs4 to the third boundary surface bs3, but also for cross-linking the first boundary surface bs1 to the fifth boundary surface bs5, and for cross-linking the fourth boundary surface bs4 to the sixth boundary surface bs6. Or stated in simple terms, FIG. 3 illustrates a composite panel having an elongated element g which is chemically cross-linked to the first and third thermoplastic polymer layer a1, a3 using a same composition (c) as is used for cross-linking the second thermoplastic polymer layer (b) to the first and the third thermoplastic polymer layers (a1, a3).

Certain aspects of the present invention, especially chemical aspects regarding chemical crosslinking of the thermoplastic layers a1 and a3 with b, and/or regarding suitable compositions (c), and/or other process parameters, are also described in patent document WO2022/009185(A1), incorporated herein by reference in its entirely.

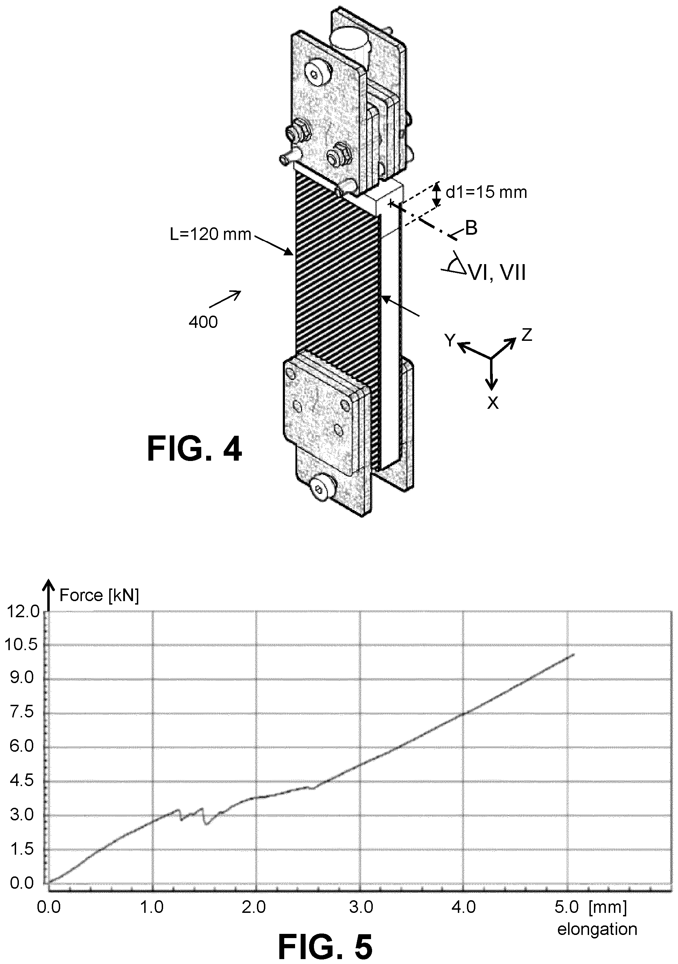

**FIG. 4** shows an illustrative test sample, having an elongated element as illustrated in FIG. 1A, and FIG. 5 shows the results of a tensile test performed on the test sample of FIG. 4.

The purpose of the test was to detect at which force the "insert" would separate from the composite panel. The test-bench was capable of exerting a maximum force of 10084 N, (corresponding to a weight of about 1028 kg). The test was performed on a test sample having a length of 120 mm, at a test speed of 20.0 mm/min, and with a pretension of 50.0 N. The layers a1 and a3 are fibre-reinforced organosheets having a thickness T1 and T3 of 2 mm. The layer b is a foamed layer having a thickness T2 of 13 mm (thus total thickness of the composite panel is about 2+13+2=17 mm). The elongated element has an interior portion g1 that is inserted between, and chemically cross-linked to the organosheets a1, a3 over a distance d1 of about 15 mm.

As can be seen, the maximum deflection of the composite panel was 5.06 mm, mainly due to the an elongation of the thermoplastic layers. But the inventors were extremely surprised to see that the elongated element did not separate from the thermoplastic , despite the relatively small boundary surfaces (approximately 120 mm x 10 mm) with which the insert was cross-linked to the thermoplastic layers a1, a3, not even at 10 kN. This was totally unexpected, especially in view of the very small "interconnection surfaces" of only about 120 mm x 15 mm by which the elongated element is held between the organosheets.

Importantly, the results of this test proof that it is possible to firmly connect an elongated element to an edge (or side) of a composite panel in a chemical manner to the inside of the composite panel, in a highly reliable manner. Thanks to the results of this test, a prejudice in the field is overcome, because, until now, it was believed to be impossible to firmly connect an elongated edge profile to an edge (or side) of a composite panel without connections means (e.g. clamping means) on the outside of the composite panel, and/or without connection means passing through the composite layers. This "discovery" opens the door for new applications, which were impossible until now. This advantage cannot be underestimated.

Further experiments with the test sample 400 have demonstrated that the fixation of the elongated element of the composite panel 400 of FIG. 4 is also highly robust against other forces, such as for example a torque about the imaginary axis B.

**FIG. 6** is a dithered picture showing a portion of the test sample 400 of FIG. 4 in more detail.

As can be seen, the test sample 400 has the structure illustrated in FIG. 2 or FIG. 3. The elongated element g of the test sample of FIG. 4 was made of nylon PA6, and was chemically cross-linked to the layers a1 and a3 using the same composition c as was used for cross-linking the layer b to a1 and to a2. But as described above, the present invention is not limited hereto, and the elongated element can be made of another material, and it can be connected to the thermoplastic polymer layers a1, a3 using a second composition (d) different from the first composition (c).

In the example of the prototype shown, there is a spacing d6 between the external portion of the T-shaped element and the edge of the thermoplastic polymer layer a1, but in preferred embodiments of the present invention, there is no spacing d6, and the exterior portion of the elongated element would preferably abut the edge of the thermoplastic polymer layers a1 and a3.

**FIG. 7** shows the same picture as FIG. 6, but slightly brighter, and is provided for illustrative purposes.

**FIG. 8** is a simplified drawing of a composite panel 800 proposed by the present invention, having the same or similar elongated element as used in FIG. 1A or FIG. 2 or FIG. 3. As can be seen, this elongated element has a cross-section with an overall T-shape, where the central leg of the T-shape is at least partially inserted between the first and the third thermoplastic polymer layers a1, a3. The top leg preferably abuts the layers a1 and a3, but that is not absolutely required.

As already mentioned above, the elongated element does not need to have a T-shaped cross-section, and many other cross-sections can also be used, e.g. as described next.

**FIG. 9** shows a composite panel 900, which is a variant of the composite panel 800 of FIG. 8, wherein the elongated element g comprises a male snap fit joint.

**FIG. 10** shows a composite panel 1000, which is a variant of the composite panel 900 of FIG. 9, wherein the elongated element g furthermore comprises a collar. This may be helpful during production of the composite panel, to ensure that the elongated element is inserted over the envisioned distance, by abutting the collar to the first and third layer a1, a3. The elongated element of FIG. 10 is shown separate from the layers a1, b, a3, for illustrative purposes, to clearly show that the collar is part of the elongated element.

**FIG. 11** shows a composite panel 1100, which is a another variant of the composite panel 800 of FIG. 8, wherein the elongated element comprises a through-opening extending in a direction parallel to the edge of the panel. Preferably the opening is a circular opening, suitable for receiving a round bar or a round rod (see e.g. FIG. 24, FIG. 25, FIG. 36).

**FIG. 12** shows a composite panel 1200, which is a further variant of the composite panel 1100 FIG. 11, wherein the elongated element furthermore comprises a collar, for the same reasons as mentioned for FIG. 10. The elongated element of FIG. 12 is shown separate from the layers a1, b, a3, for illustrative purposes.

**FIG. 13** shows a composite panel 1300, which is a another variant of the composite panel 800 of FIG. 8, wherein the elongated element comprises a blind hole extending in a direction perpendicular to the edge of the panel, with an internal screw thread. Only one opening is shown, but the elongated element may of course have multiple openings along the length of the elongated element. These openings may then be used to connect the composite panel to other structures, or to other composite panels, or to provide additional functions to the elongated element, e.g. as illustrated in FIG. 14.

**FIG. 14** shows a composite panel 1400, which is a further variant of the composite panel 1300 of FIG. 13, further comprising a hinge, screwed to the elongated element.

The skilled person will understand that FIG. 8 to FIG. 14 only show a few illustrative examples of elongated elements that can be firmly connected to the composite panel, but of course the present invention is not limited to these examples, and many other elongated elements can be used as well.

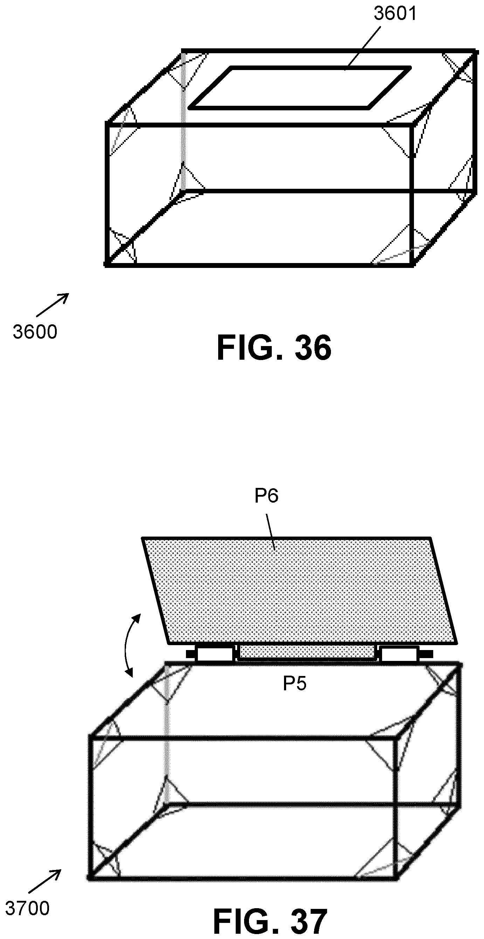

It is noted that the "elongated element" does not need to extend over the entire length or the entire width of the composite panel, it suffices that it extends over only a portion of that length or width. It is also noted that a composite panel may have multiple elongated elements incorporated on any one of its sides, and that these elongated elements may have different functionalities, see e.g. FIG. 36 where the back panel P5 may have "male snap-fit joints" at its bottom side, and "male snap-fit joints" at its left and right lateral side, but may have "hinges" at its top side.

**FIG. 15** shows a flow-chart of a method 1500 of producing a composite panel 100, 300 with an elongated edge profile (g) with load bearing capacity, e.g. the composite panel 100 shown in FIG. 1A or the composite panel 300 shown in FIG. 3, or variants thereof. The method comprises the following steps, but do not necessarily need to be performed in the following order:
i) providing 1501 a first thermoplastic polymer layer (a1) having a first boundary surface (bs1);
ii) providing 1502 a second thermoplastic polymer layer (b) having a second boundary surface (bs2) and a third boundary surface (bs3);
iii) providing 1503 a third thermoplastic polymer layer (a3) having a fourth boundary surface (bs4);
iv) providing 1504 an elongated element (g) having a transversal cross section with a first portion (g1) and a second portion (g2), the first portion (g1) having a fifth boundary surface (bs5) and a sixth boundary surface (bs6);
v) positioning 1505 the second thermoplastic polymer layer (b) between the first (a1) and the third thermoplastic polymer layer (a3), such that the first and the third thermoplastic polymer layers (a1, a3) extend further than the second thermoplastic polymer layer (c) by a predefined distance (E1), e.g. at least 5 mm; (or stated in other words: "such that the second thermoplastic polymer layer (c) is offset from the first and the third thermoplastic polymer layer by a distance E1, on at least one side").
vi) positioning the elongated element (g) such that its first portion (g1) is situated between the first and the third thermoplastic polymer layer (a1, a3); and optionally such that its second portion (g2) is situated outside of the first and the third thermoplastic polymer layer (a1, a3);
vii) chemically adhering or glueing or chemically cross-linking the first boundary surface (bs1) and the second boundary surface (bs2), e.g. using an adhesive or a composition (c);
viii) chemically adhering or glueing or chemically cross-linking the third boundary surface (bs3) and the fourth boundary surface (bs4), e.g. using said adhesive or said composition (c);
ix) chemically adhering or glueing or chemically cross-linking the fifth boundary surface (bs5) and the first boundary surface (bs1), e.g. using said adhesive or said composition (c) or a composition (d);
x) chemically adhering or glueing or chemically cross-linking the sixth boundary surface (bs6) to the fourth boundary surface (bs4), e.g. using said adhesive or said composition (c) or said composition (d).

In step v) the first and the third thermoplastic polymer layers a1, a3 are substantially aligned, but the second thermoplastic polymer layer b is laterally offset from the layers a1 and a3.

The second layer b may have a rectangular size with a length L2 that is at least 10 mm, or at least 15 mm, or at least 20 mm smaller than L1; and may have a width W2 that is at least 10 mm, or at least 15 mm, or at least 20 mm smaller than W1.

Step i) may comprise: providing a top layer a1 of an organosheet having a first thickness T1 in the range from 1.0 to 4.0 mm, or in the range from 1.5 to 3.5 mm, e.g. equal to about 2.0 mm, or equal to about 2.5 mm, or equal to about 3.0 mm, and having a first length L1 and a first width W1.

Step ii) may comprise: providing a foam layer b having a second thickness T2, e.g. in the range from 7 mm to 40 mm, or from 7 mm to 30 mm, or from 7 mm to 25 mm, or from 7 mm to 20 mm, e.g. equal to about 13 mm ±2mm, or equal to about 15 mm ±2mm.

Step iii) may comprise: providing a bottom layer a3 of an organosheet having a third thickness T3 in the range from 1.0 to 4.0 mm, , or in the range from 1.5 to 3.5 mm, e.g. equal to about 2.0 mm, or equal to about 2.5 mm, or equal to about 3.0 mm, preferably equal to T1; and having a third length L3 substantially equal to L1, and having a third width W3 substantially equal to W1.

Step iv) may comprise: providing one or more elongated elements made of a thermoplastic material, e.g. a polyamide, e.g. nylon A6, or a polyester, or made of aluminum or an aluminum alloy.

The steps v) to x) may be performed as followings:
- placing the sheet a3 in horizontal position, as the bottom of a stack, e.g. in a press;
- applying glue or adhesive or component c on top of the sheet a3;
- placing the second layer b on top of the stack, such that an edge of layer b is laterally offset with respect to the corresponding edge of a3, and placing the one or more elongated element g on top of the stack; (it is also possible to first place the elongated element(s), and to then place the layer b);
- applying glue or adhesive or component c on top of the second layer and on top of at least a first portion(s) g1 of the one or more elongated element(s) g;
- placing the sheet a1 on top of the stack;
- applying a pressure in the range from 0.20 bar to 5.0 bar or in the range from 20 kPa to 500 kPa, or in the range from 20 kPa to 100 kPa, and applying a temperature in the range from 30°C to 120°C (e.g. a temperature about 100°C ±20°C);
- letting the stack cure under pressure during a predefined time period, e.g. in the range from 3 to 60 minutes, or in the range from 3 to 45 minutes.

The positioning of the one or more elongated element(s) may be performed before, after or substantially simultaneously with the positioning of the second thermoplastic polymer layer (b).

It is a major advantage of the method of FIG. 15, that the composite panel can be manufactured in one go, including the elongated element. This is beneficial in terms of production time, but also in terms of quality and strength.

In an embodiment, the method is configured to make a composite panel with four elongated elements, one along each size. This method comprises the following steps:
- step ii) comprises: providing the second thermoplastic polymer layer (b) having a rectangular shape with a length that is at least 2x10mm = 20 mm, or at least 2x12.5mm = 25 mm, or at least 2x15 mm = 30 mm shorter than the length of the first and third thermoplastic polymer layers (a1, a3), and/or having a width that is at least 20 mm, or at least 25 mm, or at least 30 mm shorter than the width of the first and third thermoplastic polymer layers (a1, a3), and preferably both.
- step iv) comprises: providing four elongated elements (g);
- step v) comprises: positioning the second thermoplastic polymer layer (b) substantially in the middle on the first thermoplastic layer (a1) while leaving an elongated strip of at least 20 mm open near the four edges;
- step vi) comprises: positioning each of the four elongated elements along one of the four sides of the first thermoplastic layer (a1).

**FIG. 16** shows a flow-chart of a method 1600 of producing a composite panel 100, 300 with an elongated edge profile (g) with load bearing capacity. This method 1600 comprises the exact same steps as the method 1500, but performed in a slightly different order. The method of FIG. 15 may be referred to as the "single step approach". The method of FIG. 16 may be referred to as the "two-step approach".

In a first series of steps 1600a, a composite panel is formed without elongated element(s), and the second layer (b) is offset from the first and third layer (a1, a3) on at least one side of the panel, so as to leave an opening for accommodating one or more elongated elements.

In a second series of steps 1600b, at least one elongated element is provided, and an adhesive or a composition is applied inside said opening and/or on the surfaces gla, gib of the elongated element(s), and the elongated element(s) is/are partially inserted inside the opening of the panel, and glued or chemically cross-linked thereto.

Each of the series of steps 1600a, 1600 may comprise: applying a pressure in the range of 0.20 bar to 5.0 bar, and applying a temperature in the range from 30°C to 120°C, and letting the stack cure under pressure.

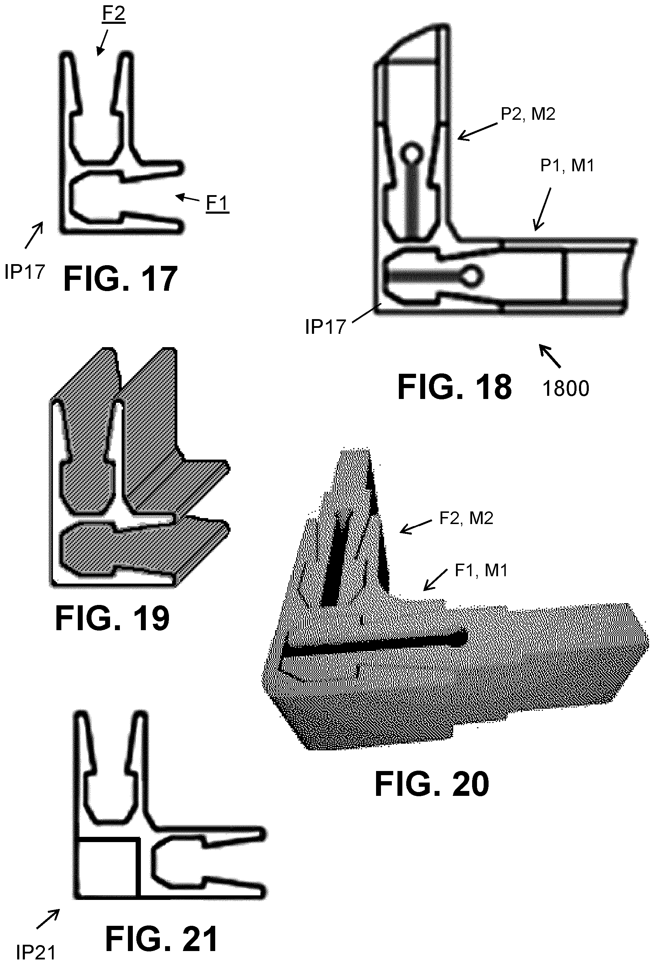

**FIG. 17** shows a cross-section of an illustrative example of an interconnection profile IP17 (or "edge connector") having two female snap-fit joints F1, F2, as may be used in embodiments of the present invention, for interconnecting two composite panels P1, P2 at an angle of 90°. The interconnection profile IP17 can be made of any suitable material, e.g. a thermoplastic material, a thermoset material, aluminum, an aluminum alloy, nylon PA6, PLA (polyactic acid), or another suitable material.

In certain embodiments, the interconnection profile comprises a fibre-reinforced material, e.g. a fibre-reinforced thermoset material (e.g. glass/vinylester), or a fibre-reinforced thermoplastic material (e.g. glass/PA-6).

In certain embodiments, the interconnection profile is not fibre-reinforced. Such a profile can for example be made by machining a flat panel. But the interconnection profile can also be made in any known manner, e.g. by pultrusion, or extrusion.

**FIG. 18** shows the interconnection profile IP17 of FIG. 17 mechanically engaged with two composite panels P1, P2. As can be seen, the first composite panel P1 has a first elongated element with a male snap-fit joint M1, and the second composite panel P2 has a second elongated element with a male snap fit joint M2, e.g. similar to the one of FIG. 9 or FIG. 10. The male snap-fit joints M1, M2 of the first, second composite panel are mechanically engaged with the female snap-fit joints F1, F2 of the interconnection profile IP17.

**FIG. 19** shows a perspective view of the interconnection profile IP17 of FIG. 17. The interconnection profile may have any suitable length, e.g. extending over only a portion of the side of the panel, or extending over the entire side of the panel.

**FIG. 20** shows a perspective view of the interconnection profile of FIG. 18 in mechanical engagement with two male snap-fit joints, (but the composite panels are not shown for illustrative purposes).

**FIG. 21** shows another interconnection profile IP21, as can be used in embodiments of the present invention, which can be see as a variant of the interconnection profile of FIG. 17. The main difference between the interconnection profile IP21 and IP17 is that IP21 has a rectangular or square tubular element in the bottom left corner, which may for example be used for mounting doors or a hatch or the like. Many other variants are possible, for example, instead of a square or rectangular corner, the interconnection profile may have a bevelled corner, or a chamfered corner, or a slanted corner, or a rounded corner, etc.

**FIG. 22** shows a cross-section, and **FIG. 23** shows an exploded view of an illustrative example of an assembly 2200 comprising three composite panels P1, P2, P3, each having at least one elongated edge element as described above. The composite panels P1, P2, P3 are fixedly connected to each other by means of two interconnection profiles IP1, IP2. More specifically, the panel P1 has a first male snap-fit joint M1 at a first side S1 thereof, and has a second male snap-fit joint M2 at a second side S2 thereof. The panel P2 has a male snap-fit joint M3 at a third side S3 thereof, and the panel P3 has a male snap-fit joint M4 at a fourth side S4 thereof. The first snap-fit joint M1 of the first panel P1 and the third snap-fit joint M3 of the second panel P2 are mechanically engaged with a first interconnection profile IP1 having two respective female snap-fit joints, oriented 90° apart, e.g. as illustrated in FIG. 17 to FIG. 21. The second snap-fit joint M2 of the first panel P1 and the fourth snap-fit joint M4 of the third panel P3 are mechanically engaged with a second interconnection profile IP2 having two respective female snap-fit joints, oriented 90° apart. The assembly 2200 may be part of a cargo box, or a cargo bay, and may be situated for example at the back of a truck.

In a variant, the first panel P1 further comprises a pivotable connection (e.g. as illustrated in FIG. 11 or FIG. 12 or FIG. 14), e.g. at side S5 thereof, and the assembly further comprises a fourth panel P4, pivotally connected to the first panel P1, for example in a same or similar manner as illustrated in FIG. 24 and FIG. 25.

**FIG. 24** shows a top view, and **FIG. 25** shows a side view of an illustrative example of another assembly 2400. This assembly comprises two composite panels P1, P2 pivotally connected to each other.

In the example shown, the first panel P1 has three elongated elements g1, g2, g3 (or a single elongated element with three exterior portions), for example having a cross-section with a cylindrical through-opening, e.g. as illustrated in FIG. 11 or FIG. 12; and the second panel P2 has two elongated elements g4, g5 (or a single elongated element with two exterior portions), having a similar cross-section. The assembly 2400 further comprises a round bar or a rod A situated inside the throughopenings so as to form a hinge. The bar or rod A may further comprise for example two cotter pins (Dutch: "splitpen") at its ends (not shown).

In a variant, the first panel P1 has only two elongated elements, e.g. g1 and g3, thus g2 can be omitted. The panel P2 shown in FIG. 24 can still be used, but preferably has a single (relatively long) elongated element spanning substantially the entire distance between g1 and g3 (taking into account some clearance or opening).

While not explicitly shown, it is also possible to make a box comprising a bottom and a top and four upright walls. This box can be made of six composite panels, each having four sides with elongated elements for pivoting on each side, and by inserting a plurality of bars or rods on each rib of the box, preferably with cotter pins at both ends. It is a major advantage that such boxes can be compactly stored in disassembled form, can be readily assembled by arranging the panels, inserting said rods or bars, and bending the ends of the cotter pins; transported with good inside; opened by a receiving party by bending the ends of the cotter pins, end removing the cotter pins and the rods and bars, unloaded or unpacked, and disassembled, and if needed returned in a compact manner to the sending party.

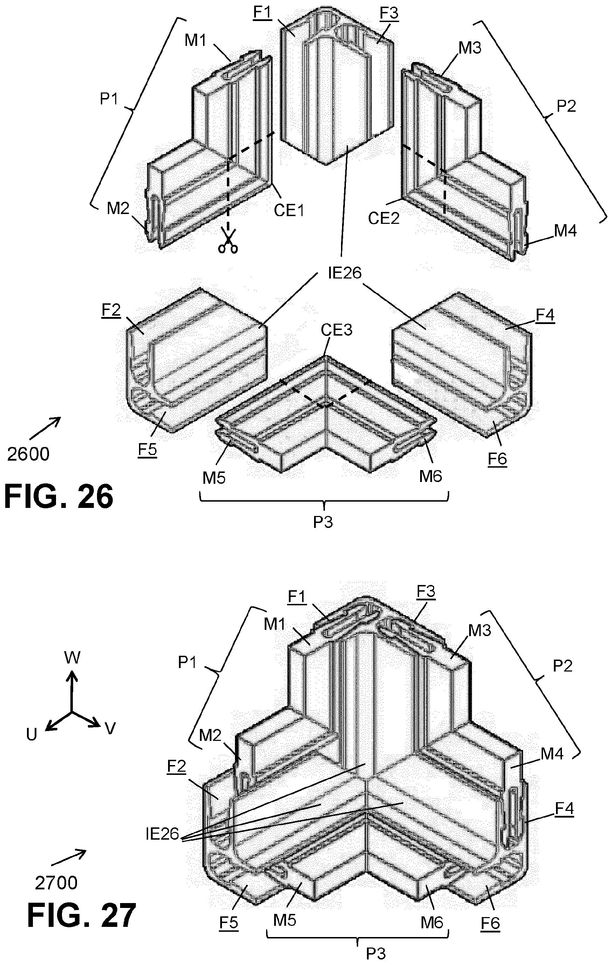

**FIG. 26** shows an exploded view of an illustrative example of an interconnection element (or "corner connector") IE26 having six female snap-fit joints F1 to F6, as can be used in embodiments of the present invention, for interconnecting three composite panels P1, P2, P3, at angles of 90°. The interconnection element IE26 is shown as three separate parts for illustrative purposes, but in reality it is a single part, preferable integrally formed.

**FIG. 27** shows the interconnection element IE26 of FIG. 26 in perspective view, in mechanical engagement with three pairs of male snap-fit joints (M1,M2; M3,M4; M5,M6) located near the corners of adjacent sides of three composite panels P1, P2, P3.

It can be seen that, if the ribs of the interconnection elements are oriented in the U,V,W directions, a first panel P1 is situated in the UW-plane, a second panel P2 is situated in the VW-plane, and a third panel P3 is situated in the UV-plane.

In the embodiment shown in FIG. 26, the adjacent male snap fit joints of each panel, e.g. M1 and M2, extend along adjacent sides of the panel and reach each other in a common corner end CE1. Likewise, M3 and M4 reach each other at common corner end CE2, and M5 and M6 reach each other at common corner end CE3. This may hinder easy insertion of the male snap-fit-joints into the female counterparts. In a variant, a portion of the male snap-fit joints are omitted in the actual corner, e.g. as suggested by the dotted lines and the scissors-symbol.

The interconnection element itself can be made for example by injection molding.

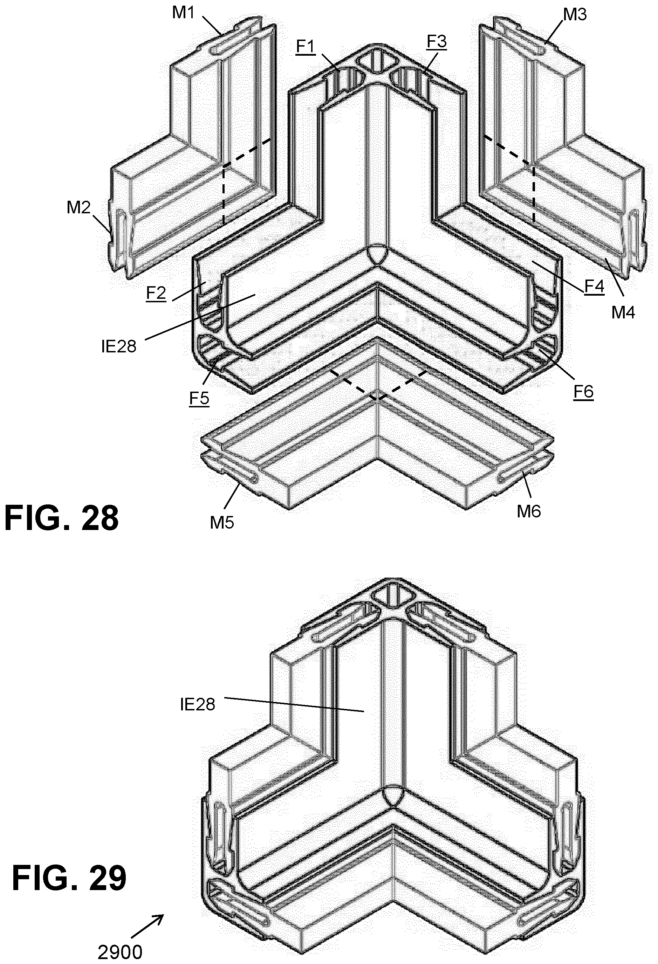

**FIG. 28** shows another interconnection element IE28 having six female snap-fit joints F1 to F6 oriented in three orthogonal directions, connectable to corners of three composite panels, each having two male snap-fit-joints (M1,M2; M3,M4; M5,M6), in perspective view. The interconnection element IE28 can be seen as a variant of the interconnection element IE26 of FIG. 26.

**FIG. 29** shows a perspective view of the interconnection element IE28 of FIG. 28 in mechanical engagement with said six male snap-fit joints (M1,M2; M3,M4; M5,M6) situated at the corners of three composite panels (not explicitly shown for illustrative purposes).

In a variant, a portion of the male snap-fit joints are omitted (or removed) in the very corner, e.g. as suggested by the dotted lines, as explained in FIG. 26.

**FIG. 30** shows an exploded view of an illustrative example of another assembly 3000 proposed by the present invention. The assembly 3000 comprises four composite panels P1 to P4 fixedly connected to each other by means of five interconnection profiles IP1 to IP5, and by two interconnection elements IE1, IE2, sized and arranged to form an "open box".

More in particular, in the embodiment shown in FIG. 30, the first panel P1 has a first male snap-fit joint M1 at a side S1, a second male snap-fit joint M2 at a second side S2, and a third male snap-fit joint M3 at a third side S3 thereof. The second panel P2 has a fourth male snap-fit joint M4 at a side S4 thereof, and a fifth male snap-fit joint M5 at a side S5 thereof, adjacent side S4. The third panel P3 has a sixth male snap-fit joint M6 at a side S6 thereof, and a seventh male snap-fit joint M7 at a side S7 thereof, adjacent side S6. The fourth panel P4 has a male snap-fit joint M8 at a side S8 thereof, a male snap-fit joint M9 at a side S9 thereof, and a male snap-fit joint M10 at a side S10 thereof. The first interconnection element IE1 is mechanically connected with M4 and M5 of the second panel P2, and with M1 and M2 of the first panel P1, and with M8 and M9 of the fourth panel P4. The second interconnection element IE2 is mechanically connected with M6 and M7 of the third panel P3, and with M2 and M3 of the first panel P1, and with M8 and M10 of the fourth panel P4. A first interconnection profile IP1 is mechanically connected to M1 of P1 and to M4 of P2. A second interconnection profile IP2 is mechanically connected to M3 of P1 and to M6 of P3. A third interconnection profile IP3 is mechanically connected to M5 of P2 and to M9 of P4. A fourth interconnection profile IP4 is mechanically connected to M7 of P3 and to M10 of P4. A fifth interconnection profile IP5 is mechanically connected to S2 of P1 and to M8 of P4.

In a variant, one or more of the legs of the interconnection element IE1 and/or IE2 extend over the entire length or width of the corresponding panels, such that the associated interconnection profile can be omitted.

In a variant the (relatively long) interconnection profile IP5 is replaced by two or more (relatively short) interconnection profiles (not shown). In this way, the number of different parts required to build the assembly can be reduced, especially if these smaller parts have the same length as IP1 to IP4.

It is explicitly pointed out that the four panels P1 to P4 are held in place, even in the absence of one or more or even all of the interconnection profiles IP1 to IP5. Thus, an assembly comprising the four panels P1 to P4 and the two interconnection elements IE1 and IE2 is also an assembly.

**FIG. 31** shows the assembly of FIG. 30 also in exploded view, but with thin lines, for illustrative purposes.

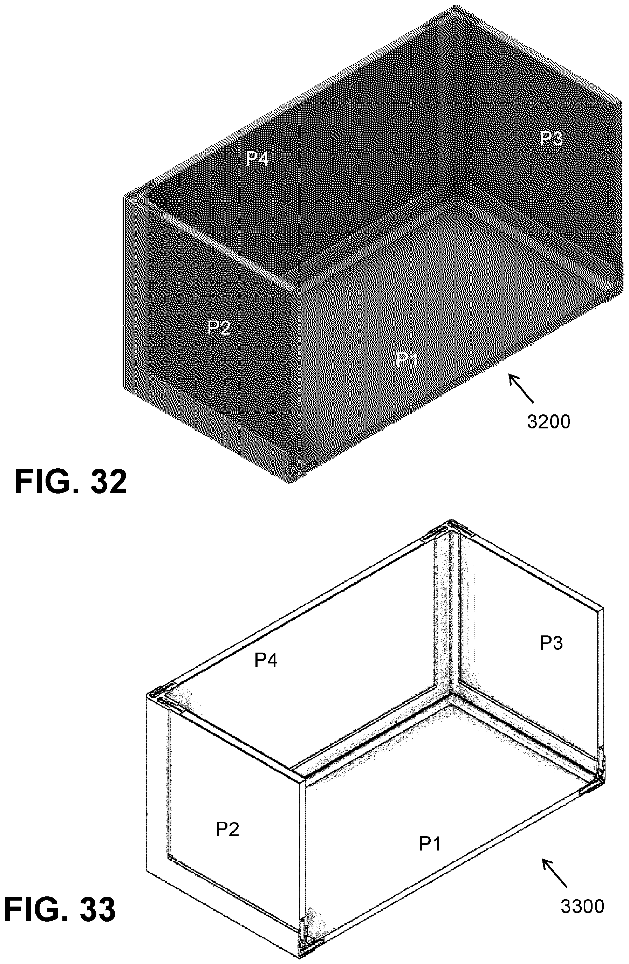

**FIG. 32** shows a dithered picture of the assembly of FIG. 30 and FIG. 31, in top perspective view. Since this assembly can easily be assembled by inserting the male snap-fit joints into the female snap-fit joints, this assembly may be referred to as a "click-box". The side panels P2, P3 of this box may typically have an area from about (40cm x 40cm) to (100cm x 100cm), but of course, the present invention is not limited thereto.

**FIG. 33** shows the box of FIG. 32 in line drawings.

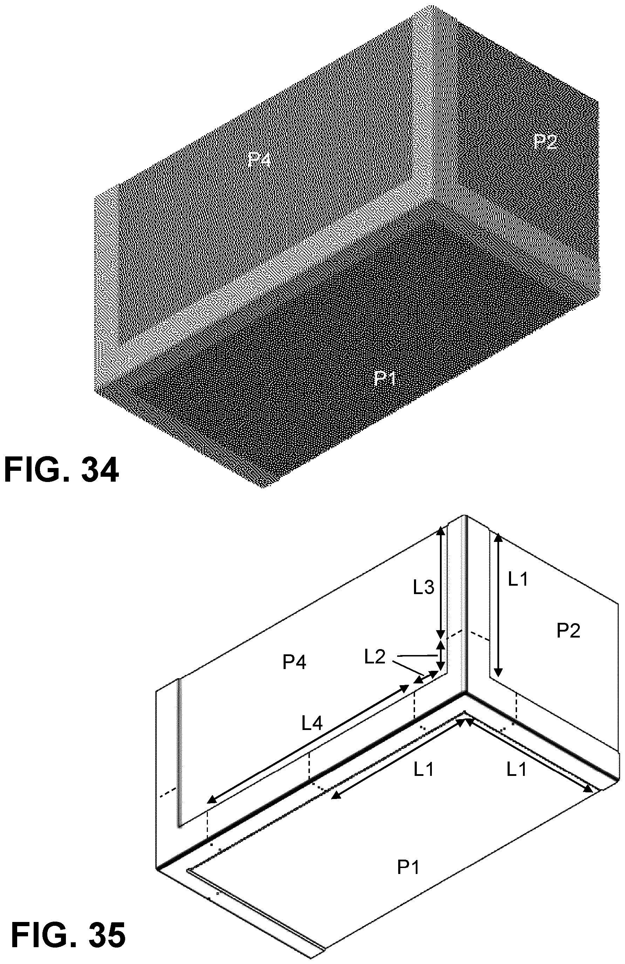

**FIG. 34** shows a dithered picture of the box of FIG. 30 and FIG. 31, in bottom perspective view.

**FIG. 35** shows the box of FIG. 34 in line drawings.

In fact, FIG. 35 illustrate three embodiments:
i) a box comprising or consisting of four panels P1 to P4 and two interconnection elements IE1, IE2 each having three ribs of length L1;
ii) a box comprising or consisting of four panels P1 to P4 and two interconnection elements IE1, IE2 each having three ribs of length L2, and five interconnection profiles having length L3;
iii) a box comprising or consisting of four panels P1 to P4 and two interconnection elements IE1, IE2 each having three ribs of length L2, and four interconnection profiles having length L3, and one interconnection profile having length L4.

The skilled reader, having the benefit of the present disclosure, will understand that the composite panels with one or more male snap-fit joints, and the interconnection profiles and the interconnection elements with female snap-fit joints described above can be used as "building blocks" for building also other assemblies, e.g. as will be described next.

**FIG. 36** shows an example of another assembly 3600 proposed by the present invention, referred to herein as a "box" or "crate". This assembly comprises six composite panels P1 to P6 and eight interconnection elements at the corners (e.g. similar to IE26 of FIG. 26 or IE28 of FIG. 28), and optionally interconnection profiles situated between the interconnection elements, but that is not absolutely required, as described above, because the eight interconnection elements will hold the six panels together even without the interconnection profiles. The assembly 3600 is a box having a bottom wall and four side walls and a top panel. The top panel P6 may have an opening, and/or a hatch 3601, and optionally locking means (not shown).

**FIG. 37** shows an example of another assembly 3700 proposed by the present invention, which can be seen as a variant of the assembly 3600 of FIG. 36, wherein the top panel P6 is hingedly connected to the rest of the box, rather than fixedly. The panel P6 may have multiple elongated elements, or a single, relatively long elongated element, as described in FIG. 24 and FIG. 25. The top panel P6 may be pivotally connected to the back panel P5, or to an interconnection profile.

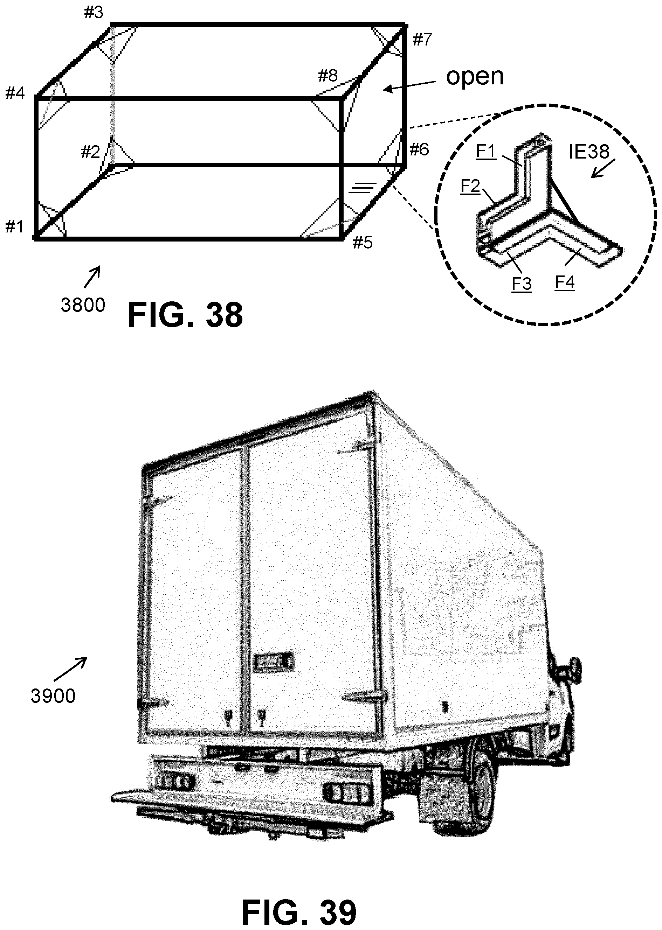

**FIG. 38** shows another illustrative example of an assembly 3800 proposed by the present invention. This assembly 3800 comprises five composite panels fixedly connected to each other to form a box having a bottom and three side walls and a top panel, but one of the side walls (in the example of FIG. 38, the one situated on the right side of the Figure) is omitted. The five composite panels preferably have elongated elements with a male snap-fit joint on all four sides of the rectangular panels.

The panels are held together using interconnection elements situated at the eight corners, for example by eight interconnection elements IE26 of FIG. 26 or eight interconnection element IE28 of FIG. 28, each interconnection element having six female snap-fit joints, as explained above.

Alternatively, the interconnection elements in the corners #1 to #4 are of the type having six female snap-fit joints (e.g. IE26 or IE28), because each of these interconnection elements needs to mechanically engage with three composite panels, but the interconnection elements in the corners #5 to #8 may be of a type having only four female snap-fit joints, for example IE38 of FIG. 38, which can for example be produced by injection moulding.

**FIG. 39** shows another illustrative example of an assembly 3900 proposed by the present invention, in the form of a cargo box of a truck, with two back doors. The assembly 3900 of FIG. 39 can be seen as an example or a variant of the assembly 3800 of FIG. 38. The cargo box 3900 may have a length of about 4.0 m, and a height of about 1.8 m, and a width of about 1.7 m, but of course, the present invention is not limited to these particular dimensions. At least some of the interconnection profiles of the cargo box 3900 are preferably made of a metal or a metal alloy, e.g. an aluminum alloy, because such profiles allow easy mounting of hinges and locking means.

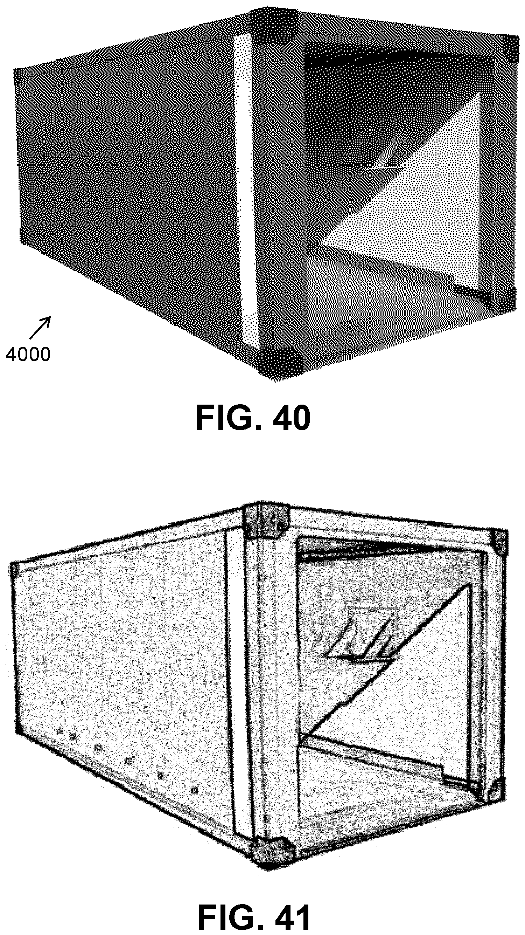

**FIG. 40** and **FIG. 41** shows another illustrative example of an assembly 4000 proposed by the present invention, in the form of a shelter with one open side. **FIG. 40** is a dithered picture. **FIG. 41** shows a kind of line drawing.

The assemblies described above, e.g. in FIG. 22 to FIG. 41, or variants thereof can be used to construct a cargo-box for a drone, or a caravan, or a trailer, or a container, or the like.

**FIG. 42** shows a cross-section of an illustrative example of an interconnection profile (or "planar side connector") IP42 having two female snap-fit joints F1, F2, as can be used in embodiments of the present invention, for interconnecting two composite panels at an angle of 180°.

**FIG. 43** shows a perspective view of the interconnection profile IP42 of FIG. 42. The interconnection profile IP42 shown in FIG. 43 is open in the front and in the back (in a plane parallel to the plane UV). During assembly, male snap-fit joints can be easily and quickly inserted in the female openings by moving the composite panels in the positive or negative U-direction. It is an advantage that the assembly can be disassembled by shifting the panels in the W-direction relative to the interconnection profile IP42. It is possible to mount one or two cover elements (not shown) at one or both ends of the interconnection profile IP42, to prevent the panels from sliding sideways.

**FIG. 44** shows the interconnection profile IP42 of FIG. 42 mechanically engaged with two composite panels P1, P2, each having a male snap-fit joint M1, M2.

It is a major advantage that the upper surfaces of the composite panels P1, P2 and of the interconnection profile can be completely. flat. This is possible because the elongated elements are connected only on the inside of the composite panel, as described in FIG. 1A to FIG. 3, and do not require any mechanical parts (e.g. rivets, nuts, washers, bulges, thickenings, etc.) extending above the top layer a1 or below the bottom layer a3. Making such a connection in a highly reliable manner, is one of the underlying principles of the present invention.

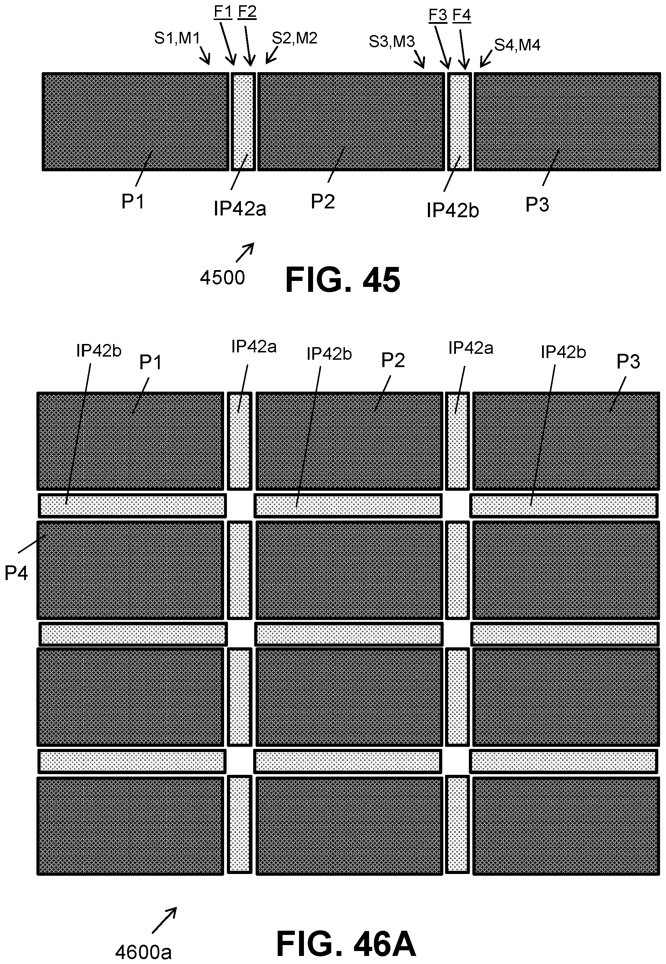

**FIG. 45** shows an assembly 4500 in the form of a one-dimensional array comprising at least three composite panels P1, P2, P3 mechanically connected to each other, using two or more interconnection profiles IP42a, IP42b. The composite panels have elongated elements with male snap-fit joints, and the interconnection profiles have female snap-fit joints, which are mechanically engaged.

More specifically, the first composite panel P1 has at least one side S1 with an elongated element having a male snap-fit joint M1; the composite panel P2 has at least two opposite sides S2, S3, each with an elongated element having a male snap-fit joint M2, M3; and the third composite panel P3 has at least one side S4 with an elongated element having a male snap-fit joint M4. The first interconnection profile IP42a has two female snap fit joints F1, F2 for mechanically engaging with the male snap-fit joints M1 and M2 respectively; and the second interconnection profile IP42b has two female snap fit joints F3, F4 for mechanically engaging with the male snap-fit joints M3 and M4 respectively. The assembly 4500 shown in FIG. 45 has only three composite panels, but it is of course also possible to connect more than three composite panels, for example at least four composite panels, or at least five composite panels, or less than three composite panels. The panels of the assembly 4500 shown in FIG. 45 may have a length in the range from 1.0 m to 3.0 m, and a width of about 30% to 70% of said length, but of course, the present invention is not limited thereto, and larger or smaller composite panels may also be used.

**FIG. 46A** shows an assembly 4600 in the form of a two-dimensional array of composite panels mechanically connected to each other, using a plurality of interconnection profiles, e.g. similar to the interconnection profile IP42 of FIG. 42. If the composite panels have a rectangular shape with a length L and a width W, where W <>L, then two different interconnection profiles IP42a, IP42b are needed for interconnecting the panels along their lengths, and along their widths.

The arrangement illustrated in FIG. 46A may not be ideal, however, if the assembly will not be uniformly or evenly loaded, because the 2D array may deform along the interconnection profiles oriented in the U-direction or the V-direction.

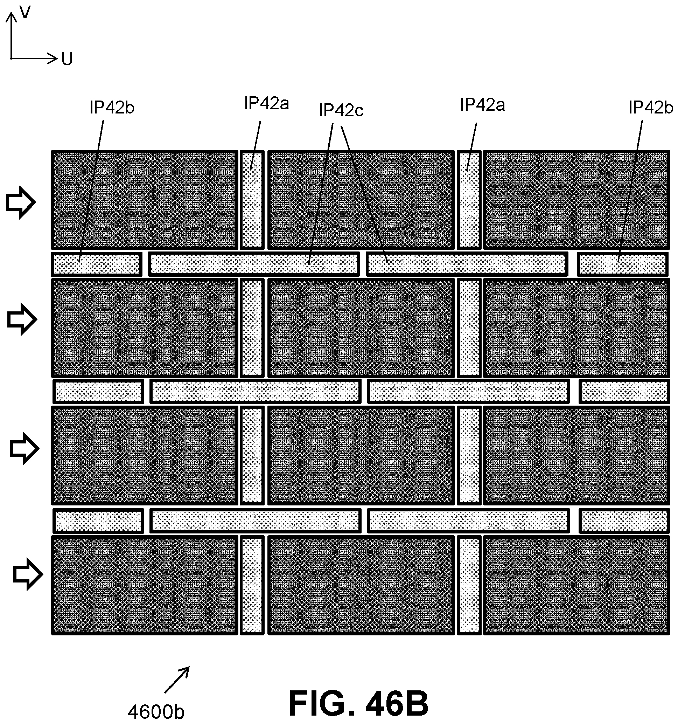

**FIG. 46B** shows a variant of the assembly 4600 using the same composite panels, and the panels are again arranged in a checkerboard manner, but the interconnection profiles are arranged differently. More specifically, the interconnection profiles IP42c are arranged alongside two adjacent composite panels. If the interconnection profiles are strong, the arrangement of FIG. 46B may have an improved flatness in the U-direction.

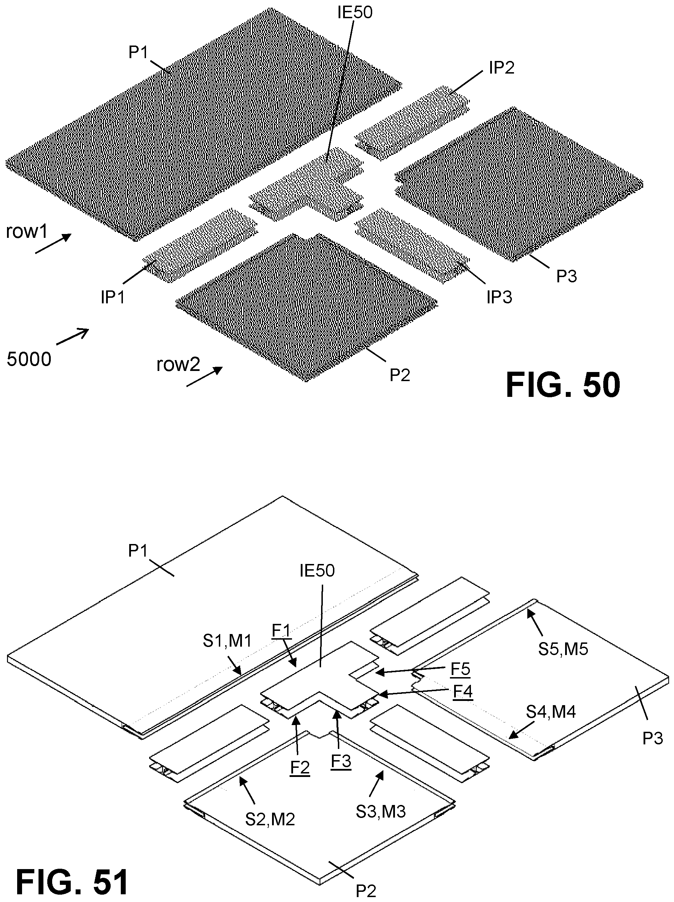

**FIG. 47** shows a dithered picture, and **FIG. 48** show a line drawing of an assembly 4700, comprising three composite panels P1, P2, P3, mechanically interconnected using a T-shaped interconnection element IE47 having five female snap-fit joints. (see also FIG. 51). The legs of the T-shaped interconnection element IE47 are relatively long, and correspond with lengths and widths of the panels. The assembly of FIG. 47 and FIG. 48 comprises only three composite panels, but the skilled reader will understand that this T-shaped interconnection element IE47 can also be used to form a relatively large 2D-assembly.

**FIG. 49** shows an enlarged view of the cross-section of the T-shaped interconnection element mechanically engaged with two male snap-fit joints of two panels. The skilled reader will recognize that this picture is very similar to FIG. 44, because it is indeed based on the same principles.

**FIG. 50** and **FIG. 51** show a variant of FIG. 47 and FIG. 48, also using a T-shaped interconnection element IE50, and further using three interconnection profiles, e.g. similar to that illustrated in FIG. 42. The main advantage of this embodiment is that this interconnection element IE50 has relatively short legs, which are independent of the lengths and widths of the composite panels.

As can be seen, the composite panels in row1 and row2 are offset by approximately half a panel. An important advantage of arranging the panels in a "brick-wall manner" is that the stiffness of the panel P1 will reduce or prevent the tendency that the panels P2 and P3 may form an angle different from 180° relative to the interconnection profile IP3, when the panels are non-uniformly loaded.

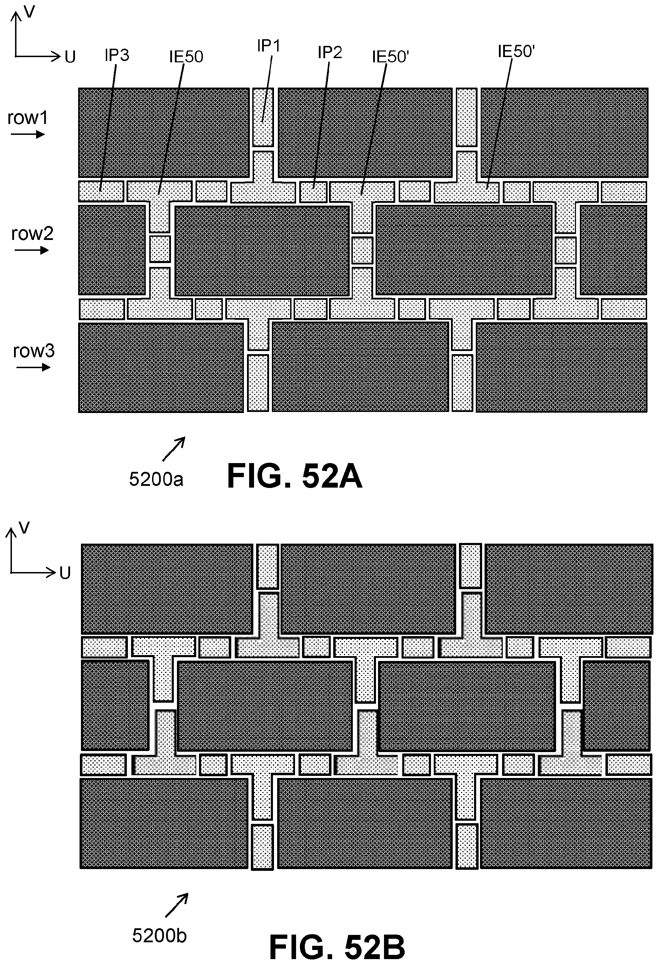

**FIG. 52A** shows an example of an assembly 5200, in the form of a two-dimensional array comprising at least three rows of composite panels, forming an airfield matting. The composite panels are mechanically interconnected using T-shaped interconnection elements similar to that of FIG. 47 (with relatively long legs) or similar to that of FIG. 50 (with relatively short legs). In the latter case, interconnection profiles IP1 and IP2 may also be used between the T-shapes.

It is noted that not all the legs of the T-shape need to have the same length. By choosing a somewhat longer length for some of the legs of the T-shaped interconnection element, some of the interconnection profiles may be omitted, while others are still needed, e.g. as illustrated in FIG. 52B.

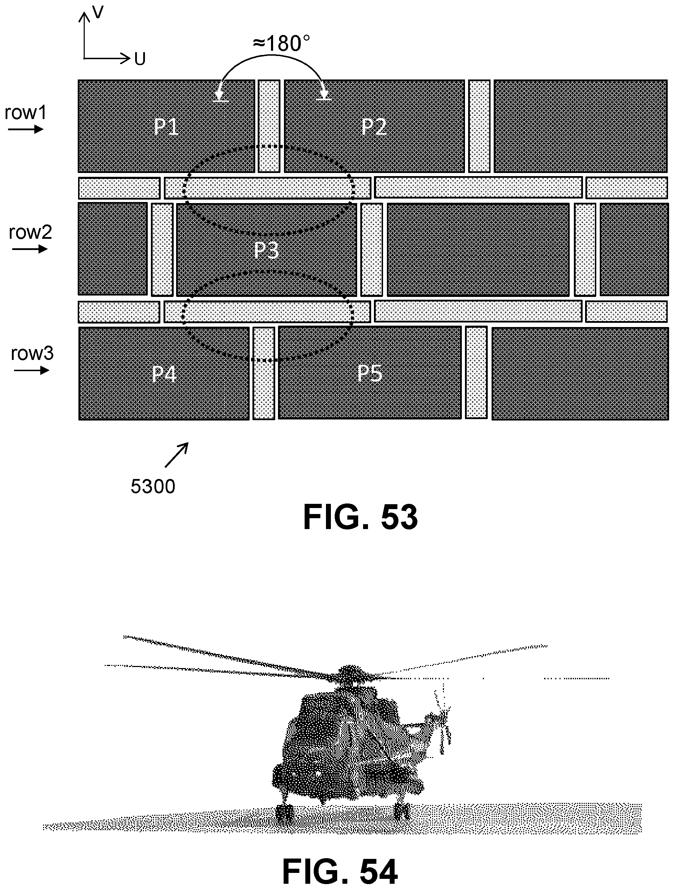

**FIG. 53** shows yet another assembly 5300 where the composite panels of adjacent rows are also offset from other (in a "brick-wall manner"), but all the composite panels are interconnected using elongated interconnection profiles such as the one shown in FIG. 42, having a suitable length. It is an advantage of this assembly 5300 that no T-shaped elements are needed, but the fact that for example panel P3 is shifted relative to panel P1 and P2, and relative to panel P4 and P5, will help ensure that the angle defined by the panels P1 and P2 is and remains close to 180°.

The assemblies of FIG. 47 to FIG. 53 may be used for example as airfield matting, in particular to form a landing track or a runway extending in the U-direction, and/or as a helipad, for example as illustrated in **FIG. 54****.**

The present invention describes assemblies where the composite panels have a male snap-fit joint, and wherein the interconnection elements or interconnection profiles have a female snap-fit joint. While not explicitly described, the invention will also work if the composite panels have a female snap-fit joint, and the interconnection elements or interconnection profiles have a male snap-fit joint. In some embodiments where composite panels have both male and female snap-fit joints, intermediate profiles may be omitted, and composite panels may be interconnected to each other directly.

### REFERENCE SIGNS:

- a1: first thermoplastic layer
- b: second thermoplastic layer
- a3: third thermoplastic layer
- c: first composition
- d: second composition or glue or adhesive
- T1: thickness of layer a1
- T2: thickness of layer b
- T3: thickness of layer a3
- Tp: total thickness of the first, second and third thermoplastic layers
- d1: first distance
- E1: distance by which first layer a1 extends beyond second layer b
- E3: distance by which third layer a3 extends beyond second layer b
- g: elongated element
- g1: first/interior portion of elongated element
- g2: second/exterior portion of elongated element
- g1a: first surface of first portion of elongated element
- gib: second surface of first portion of elongated element
- T4: thickness (or height) of first/interior portion of elongated element
- T5: thickness (or height) of second/exterior portion of elongated element
- Lf: length of elongated element
- Wg1: width of first/interior portion of elongated element (in transverse direction)
- Wg2: width of second/exterior portion of elongated element (in transverse direction)
- 100, 200, 300: composite panel
- IE: interconnection element
- IP: interconnection profile
- S1, S2, etc.: first, second ... side (of composite panel)
- M1, M2, etc.: first, second ... male snap-fit joint
- F1, F2, etc.: first, second ... female snap fit joint

## Claims

1. A composite panel comprising an elongated element (g), e.g. an edge profile, with load bearing capacity, the composite panel comprising:
- a first thermoplastic polymer layer (a1) having a first boundary surface (bs1);
- a second thermoplastic polymer layer (b) having a second boundary surface (bs2) and a third boundary surface (bs3);
- a third thermoplastic polymer layer (a3) having a fourth boundary surface (bs4);
wherein the second thermoplastic polymer layer (b) is situated between the first (a1) and the third thermoplastic polymer layer (a3);
wherein the first boundary surface (bs1) is chemically adhered or glued or chemically cross-linked to the second boundary surface (bs2), and wherein the third boundary surface (bs3) is chemically adhered or glued or chemically cross-linked to the fourth boundary surface (bs4);
wherein, on at least one side of the composite panel, the first and the third thermoplastic polymer layer (a1, a3) extend further than the second thermoplastic polymer layer (b) by a distance (E1) of at least 5 mm;
wherein, on said at least one side, the composite panel further comprises an elongated element (g) having a transversal cross section with a first portion (g1) that is situated between the first and the third thermoplastic polymer layer (a1, a3);
wherein the first portion (g1) of the elongated element (g) has a fifth boundary surface (bs5) that is chemically adhered or glued or chemically cross-linked to the first boundary surface (bs1) of the first thermoplastic polymer layer (a1), and has a sixth boundary surface (bs6) that is chemically adhered or glued or chemically cross-linked to the fourth boundary surface (bs4) of the third thermoplastic polymer layer (a3).

2. A composite panel according to claim 1,
wherein the elongated element (g) is made of a thermoplastic material, preferably selected from the group consisting of polyamide or nylon, e.g. nylon PA6, or polyester.

3. A composite panel according to claim 1,
wherein the elongated element comprises aluminum or an aluminum alloy.

4. A composite panel according to any of the previous claims,
wherein the fifth boundary surface (bs5) of the elongated element (g) is chemically adhered or glued or chemically cross-linked to the first boundary surface (bs1) of the first thermoplastic polymer layer (a1) over a first contact area;
and wherein the sixth boundary surface (bs6) of the elongated element (g) is chemically adhered or glued or chemically cross-linked to the fourth boundary surface (bs4) of the third thermoplastic polymer layer (a3) over a second contact area;
wherein each of the first and the second contact area extend over a distance (d1) of at least 4 mm in a direction transversal to the longitudinal direction of the elongated element.

5. A composite panel according to any of the previous claims,
wherein the composite panel has an overall rectangular shape with four sides;
and wherein at least two of the sides comprise one or more elongated elements (g).

6. A composite panel according to any of the previous claims,
wherein the first portion (g1) of the elongated element (g) has a thickness T4;
and wherein the elongated element (g) comprises a second portion (g2) having a thickness T5 larger than T4 forming a collar substantially abutting the first and the third thermoplastic polymer layer (a1, a3).

7. A composite panel according to any of the previous claims,
wherein the transversal cross section of the elongated element (g) has an overall T-shape.

8. A composite panel (900; 1000) according to any of the claims 1 to 6,
wherein the elongated element (g) comprises a snap-fit joint, for example a male snap-fit joint.

9. A composite panel (1100) according to any of the claims 1 to 6,
wherein the composite panel comprises at least one elongated element (g) having a second portion (g2) with a cylindrical through-opening extending in a direction parallel to the side of the panel, for accommodating a cylindrical bar or rod, for forming an hinge.

10. A composite panel according to any of the previous claims,
wherein the first boundary surface (bs1) of the first thermoplastic polymer layer (a1) and the second (bs2) boundary surface of the second thermoplastic polymer layer (b) are chemically cross-linked using a composition (c);
and wherein the third boundary surface (bs3) of the second thermoplastic polymer layer (b) and the fourth (bs4) boundary surface of the third thermoplastic polymer layer (a3) are chemically cross-linked using said composition (c);
and wherein the first boundary surface (bs1) of the first thermoplastic polymer layer (a1) and the fifth boundary surface (bs5) of the elongated element (g) are chemically cross-linked using said composition (c);
and wherein the fourth boundary surface (bs4) of the third thermoplastic polymer layer (a3) and the sixth boundary surface (bs6) of the elongated element (g) are chemically cross-linked using said composition (c);
wherein preferably the composition (c) comprises a thermoplastic elastomer and a monomer or oligomer for crosslinking said boundary surfaces.

11. A composite panel according to any of the claims 1 to 9,
wherein the first boundary surface (bs1) of the first thermoplastic polymer layer (a1) and the second (bs2) boundary surface of the second thermoplastic polymer layer (b) are chemically adhered or glued using an adhesive;
and wherein the third boundary surface (bs3) of the second thermoplastic polymer layer (b) and the fourth (bs4) boundary surface of the third thermoplastic polymer layer (a3) are chemically adhered or glued using said adhesive;
and wherein the first boundary surface (bs1) of the first thermoplastic polymer layer (a1) and the fifth boundary surface (bs5) of the elongated element (g) are chemically adhered or glued using said adhesive;
and wherein the fourth boundary surface (bs4) of the third thermoplastic polymer layer (a3) and the sixth boundary surface (bs6) of the elongated element (g) are chemically adhered or glued using said adhesive;
wherein preferably said adhesive is a polyurethane adhesive or a polyurethane-based adhesive.

12. A composite panel according to any of the claims 1 to 9,
wherein the first boundary surface (bs1) of the first thermoplastic polymer layer (a1) and the second (bs2) boundary surface of the second thermoplastic polymer layer (b) are chemically cross-linked using a composition (c);
and wherein the third boundary surface (bs3) of the second thermoplastic polymer layer (b) and the fourth (bs4) boundary surface of the third thermoplastic polymer layer (a3) are chemically cross-linked using said composition (c);
and wherein the first boundary surface (bs1) of the first thermoplastic polymer layer (a1) and the fifth boundary surface (bs5) of the elongated element (g) are chemically adhered or glued using an adhesive;
and wherein the fourth boundary surface (bs4) of the third thermoplastic polymer layer (a3) and the sixth boundary surface (bs6) of the elongated element (g) are chemically adhered or glued using said adhesive;
wherein preferably the composition (c) comprises a thermoplastic elastomer and a monomer or oligomer for crosslinking said boundary surfaces; and
wherein preferably said adhesive is a polyurethane adhesive or a polyurethane-based adhesive.

13. A composite panel according to any of the claims 1 to 9,
wherein the first boundary surface (bs1) of the first thermoplastic polymer layer (a1) and the second (bs2) boundary surface of the second thermoplastic polymer layer (b) are chemically adhered or glued using an adhesive;
and wherein the third boundary surface (bs3) of the second thermoplastic polymer layer (b) and the fourth (bs4) boundary surface of the third thermoplastic polymer layer (a3) are chemically adhered or glued using said adhesive;
and wherein the first boundary surface (bs1) of the first thermoplastic polymer layer (a1) and the fifth boundary surface (bs5) of the elongated element (g) are chemically cross-linked using a composition (c);
and wherein the fourth boundary surface (bs4) of the third thermoplastic polymer layer (a3) and the sixth boundary surface (bs6) of the elongated element (g) are chemically cross-linked using said composition (c);
wherein preferably the composition (c) comprises a thermoplastic elastomer and a monomer or oligomer for crosslinking said boundary surfaces; and
wherein preferably said adhesive is a polyurethane adhesive or a polyurethane-based adhesive.

14. Method (1500) of producing a composite panel comprising an elongated element, e.g. an edge profile, with load bearing capacity, the method comprising the steps of:
i) providing (1501) a first thermoplastic polymer layer (a1) having a first boundary surface (bs1);
ii) providing (1502) a second thermoplastic polymer layer (b) having a second boundary surface (bs2) and a third boundary surface (bs3);
iii) providing (1503) a third thermoplastic polymer layer (a3) having a fourth boundary surface (bs4);
iv) providing (1504) an elongated element (g) having a transversal cross section with a first portion (g1) and optionally a second portion (g2), the first portion (g1) having a fifth boundary surface (bs5) and a sixth boundary surface (bs6);
v) positioning (1505) the second thermoplastic polymer layer layer (b) between the first (a1) and the third thermoplastic polymer layer (a3), such that the first and the third thermoplastic polymer layer (a1, a3) extend further than the second thermoplastic polymer layer (c) by a predefined distance (E1);
vi) positioning (1506) the elongated element such that its first portion (g1) is situated between the first and the third thermoplastic polymer layer (a1, a3), and optionally such that its second portion (g2) is situated outside of the first and the third thermoplastic polymer layer (a1, a3);
vii) chemically glueing or chemically adhering or chemically cross-linking the first (bs1) and the second boundary surface (bs2) using an adhesive or using a composition (c);
viii) chemically glueing or chemically adhering or chemically cross-linking the third (bs3) and the fourth boundary surface (bs4) using an adhesive or using a composition (c);
ix) chemically glueing or chemically adhering or chemically cross-linking a fifth (bs5) and the first boundary surface (bs1) using an adhesive or using a composition (c);
x) chemically glueing or chemically adhering or chemically cross-linking the sixth (bs6) and the fourth boundary surface (bs4) using an adhesive or using a composition (c).

15. An assembly comprising:
- a first composite panel (P1) according to any of the claims 1 to 13 having a first elongated element optionally with a first male snap-fit joint;
- a second composite panel (P2) according to any of the claims 1 to 13 having a second elongated element optionally with a second male snap-fit joint;
wherein the first elongated element is mechanically connected to the second elongated element, directly or indirectly, for example by means of an interconnection profile (IP), or an interconnection element (IE).

16. An assembly (1800; 4400) comprising:
- a first composite panel (P1) according to any of the claims 1 to 13, having at least one side (S1) with a first elongated element with a first male snap-fit joint (M1);
- a second composite panel (P2) according to any of the claims 1 to 13, having at least one side (S2) with a second elongated element with a second male snap-fit joint (M2);
- an interconnection profile (IP1) having a first female snap-fit-joint (F1) for receiving the first male snap-fit joint (M1), and having a second female snap-fit joint (F2) for receiving the second male snap-fit joint (M2).

17. An assembly (2200) comprising:
- a first composite panel (P1) according to any of the claims 1 to 13, having at least one side (S1) with a first male snap-fit joint (M1) and a second side (S2), opposite the first side, with a second male snap-fit joint (M2);
- a first interconnection profile (IP1) having a first female snap-fit joint (F1) engaged with the first male snap-fit joint (M1) of the first composite panel (P1), and having a second female snap-fit joint (F2);
- a second composite panel (P2) according to any of the claims 1 to 13, having at least one side (S3) with a male snap-fit joint (M3) engaged with the second female snap fit joint (F2) of the first interconnection profile (IP1);
- a second interconnection profile (IP2) having a first (F3) female snap-fit joint (F3) engaged with the second male snap-fit joint (M2) of the first composite panel (P1), and having a second female snap-fit joint (F4);
- a third composite panel (P3) according to any of the claims 1 to 13, having at least one side (S4) with a male snap-fit joint (M4) engaged with the second female snap fit joint (F4) of the second interconnection profile (IP2).

18. An assembly (3000), comprising:
- a first composite panel (P1) according to any of the claims 1 to 13, having at least three sides (S1, S2, S3) with a male snap-fit joint (M1, M2, M3);
- a second composite panel (P2) according to any of the claims 1 to 13, having two adjacent sides (S4, S5) each with a male snap-fit joint (M4, M5);
- a third composite panel (P3) according to any of the claims 1 to 13, having two adjacent sides (S6, S7) each with a male snap-fit joint (M6, M7);
- a fourth composite panel (M4) according to any of the claims 1 to 13, having at least three sides (S8, S9, S10) with a male snap-fit joint (M8, M9, M10);
- a first interconnection element (IE1) having six female snap-fit joints for engaging with two male snap-fit joints (M1, M2) at a first corner of the first composite panel (P1), and for engaging with two male snap-fit joints (M4, M5) at a corner of the second composite panel (P2), and for engaging with two male snap-fit joints (M8, M9) at a first corner of the fourth composite panel (P4);
- a second interconnection element (IE2) having six female snap-fit joints for engaging with two male snap-fit joints (M2, M3) at a second corner of the first composite panel (P1), and for engaging with two male snap-fit joints (M6, M7) at a corner of the third composite panel (P3), and for engaging with two male snap-fit joints (M8, M10) at a second corner of the fourth composite panel (P4).

19. An assembly (4700; 5000; 5200a; 5200b), comprising:
- a first composite panel (P1) according to any of the claims 1 to 13, having at least one side (S1) with a male snap-fit joint (M1);
- a second composite panel (P2) according to any of the claims 1 to 13, having two adjacent sides (S2, S3) each with a male snap-fit joint (M2, M3);
- a third composite panel (P3) according to any of the claims 1 to 13, having two adjacent sides (S4, S5) each with a male snap-fit joint (M4, M5);
- an interconnection element (IE1) having an overall T-shape, and having five female snap-fit joints, including a first female snap fit joint for engaging with the first male snap fit joint (M1) of the first panel, and a second and third female snap fit joint (F2, F3) for engaging with two male snap-fit joints (M2, M3) of two orthogonal sides (S2, S3) at a corner of the second composite panel (P2), and a fourth and fifth female snap fit joint (F4, F5) for engaging with two male snap-fit joints (M4, M5) of two orthogonal sides (S4, S5) at a corner of the third composite panel (P3).
